# EUROPÄISCHE PATENTSCHRIFT

(11) **EP 2 208 584 B1**
(45) Veröffentlichungstag und Bekanntmachung des Hinweises auf die Patenterteilung: **21.12.2011**
(21) Anmeldenummer: 09000412.8
(22) Anmeldetag: 14.01.2009
(51) Int. Cl.: B25J 9/16, G05B 19/4061

(54) **Verfahren zur Steuerung von Industrierobotern**
Method for controlling industrial robots
Procédé destiné à la commande de robots industriels

(43) Veröffentlichungstag der Anmeldung: 21.07.2010
(73) Patentinhaber: GFRT - Fortschrittliche Robotertechnologie GmbH & Co. KG, 76133 Karlsruhe (DE)
(72) Erfinder: Karl, Sander, 76135 Karlsruhe (DE)
(74) Vertreter: Lemcke, Brommer & Partner

(56) Entgegenhaltungen:
- EP-A- 1 385 071
- EP-A- 1 604 790
- EP-A- 1 901 151
- DE-A1-102006 036 490
- MAENPAA T ET AL: "A distributed architecture for executing complex tasks with multiple robots" ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, 26. April 2004 (2004-04-26), Seiten 3449-3455Vol.4, XP010769075 ISBN: 978-0-7803-8232-9

## Beschreibung

Die Erfindung betrifft ein Verfahren sowie eine Vorrichtung zur Steuerung zumindest eines mehrachsigen automatisierten Handhabungsgerätes, insbesondere eines Industrieroboters.

Im Stand der Technik ist es bereits bei Roboter bekannt, insbesondere bei Industrierobotern zur Simulation und Programmierung von Bewegungen und Arbeitsschritten dieser, virtuelle Modelle des Industrieroboters zu verwenden. Diese virtuellen Modelle basieren auf CAD-Daten, mit deren Hilfe die Roboter programmiert werden können. Die bei derartigen Simulationen erstellen Bewegungsabläufe werden dann in entsprechende Befehle für den Roboter übersetzt, das heißt, der Roboter erhält nach der Vorabsimulation seiner Bewegung ausschließlich Bewegungsbefehle und/oder digitale bzw. analoge Verschaltungsinformationen. Die Bewegung erfolgt dann streng nach diesen durch die Simulation vorab festgelegten Befehlen und in der vorab festgelegten Befehlsreihenfolge; eine Rückkopplung der Roboterbewegung mit dem virtuellen Modell der Vorabsimulation erfolgt dabei nicht.

Nachteilig dabei ist, dass der Roboter nach der Vorabsimulation der Befehle für seine Bewegungen diese nicht mehr verändert bzw. verändern kann. Dies kann insbesondere dazu führen, dass bei nicht vorhergesehenen Ereignissen, wie z. B. ein falsch platziertes Werkstück oder ähnliches, welches sich im Arbeitsbereich des Roboters befindet und bei der Simulation nicht berücksichtigt wurde, der Roboter mit dem Werkstück möglicherweise kollidiert und so Schäden an dem Werkstück und auch an dem Roboter entstehen. Gleichzeitig muss der Arbeitsbereich ständig überwacht werden, um derartige Situationen frühzeitig vermeiden zu können. Der Roboter muss dann von einem Bediener gegebenenfalls gestoppt werden bzw. dieser muss in den Bewegungsablauf des Roboters eingreifen, um eine Kollision mit einem Hindernis, hier in Form eines Werkstücks, zu vermeiden.

Um die genannten Nachteile zu beseitigen, ist aus der US 2003/0225479 A1 ein Verfahren zur Verhinderung von Kollisionen zwischen einem Roboter und zumindest einem weiteren Objekt bekannt geworden. Dabei wird anhand einer Abbremszeit für eine automatische oder manuelle Roboterbewegung auf der Basis von vergangenen und derzeitigen Positionen und Geschwindigkeiten von jedem Robotergelenk eine charakteristische Abbremszeit festgelegt. Weiter wird die Bahn des Roboters für die genannte Abbremszeit im Voraus berechnet und die so vorhergesagte Stellung und Position des Roboters und dem weiteren Objekt im Raum über Entfernungs-Eingriffs-Algorithmen zwischen dem Roboter und anderen Objekten überprüft. Wird eine Kollision vorhergesagt bzw. ermittelt, werden der Roboter und/oder das weitere Objekt angehalten, wenn die Kollision unmittelbar bevorsteht.

EP 1 901 151 A offenbart ein Verfahren zur Vermeidung von Kollisionen zwischen einem Industrieroboter und einem Objekt. Die Kollisionen werden vermieden, in dem für Elemente des Industrieroboters und das Objekt jeweils virtuelle räumliche Bereiche definiert werden und abhängig diesen Bereichen zugeordneten Parametern der Industrieroboter in seinem Bewegungsprogramm angehalten und/oder das Bewegungsprogramm wieder fortgesetzt wird.

Zwar wird bei diesem Verfahren eine Kollision in der Mehrheit der Fälle vermieden, da der Roboter bei einer vorhergesagten Kollision angehalten wird. Ein großer Nachteil dabei ist jedoch, dass der nun angehaltene Roboter und/oder das weitere Objekt angehalten sind, mithin also der gesamte Arbeitsablauf. Ein Benutzer muss nun aktiv eingreifen und sowohl den Roboter als auch das weitere Objekt neu programmieren, um den Arbeitsablauf von Roboter und/oder weiterem Objekt wieder fortzusetzen. Dies erfordert nicht nur einen erheblichen Überwachungsaufwand durch einen Bediener, sondern der Benutzer selbst muss in die Steuerung eingreifen und eine Lösung für das Problem der Kollision von Roboter und weiterem Objekt finden.

Aufgabe der vorliegenden Erfindung ist es daher, ein Verfahren und eine Vorrichtung zur Verfügung zu stellen, welches selbstständig Bewegungen von einem Handhabungsgerät und zumindest einem weiteren Objekt koordiniert und überwacht, wobei eine Programmierung von Arbeitsabläufen von Handhabungsgerät und/oder weiterem Objekt einfacher und schneller durchführbar sein soll. Weiterhin soll es durch das neue Verfahren in einfacher Weise möglich sein, dem Benutzer einen Zugriff auf die Steuerung des Handhabungsgerätes und/oder die zumindest teilweise Änderung oder Ergänzung der Programmierung durchzuführen.

Gelöst ist diese Aufgabe durch ein Verfahren gemäß Anspruch 1. Vorteilhafte Ausgestaltungen des Verfahrens finden sich in den Ansprüchen 2 bis 13.

Bei dem erfindungsgemäßen Verfahren zur Steuerung zumindest eines mehrachsigen automatisierten Handhabungsgerätes, insbesondere eines Industrieroboters, wird somit für das Handhabungsgerät als erstes reales Objekt ein erstes virtuelles Modell und weiterhin mindestens ein zweites virtuelles Modell definiert.

Der Begriff "virtuelles Modell" bezeichnet hierbei ein virtuelles Abbild eines realen Objektes und/oder eines Raumbereiches. Das virtuelle Modell umfasst somit Daten bezüglich der räumlichen Ausdehnung des repräsentierten Objektes oder Raumbereiches und kann ebenso aus mehreren Elementen bestehen, welche einzelne zugeordnete Elemente des realen Objektes oder Raumbereiches repräsentieren. Vorteilhafterweise kann das virtuelle Modell zusätzliche Daten, wie beispielsweise absolute räumliche Koordinaten und/oder Bewegungsdaten bzw. Informationen über bewegliche Verbindungen zwischen einzelnen Elementen des realen Objektes und entsprechend einzelnen virtuellen Elementen des virtuellen Modells umfassen.

Das zweite virtuelle Modell repräsentiert einen realen räumlichen Bereich und/oder ein zweites reales Objekt. Das zweite virtuelle Modell kann somit beispielsweise einen zweiten Industrieroboter repräsentieren oder ein von dem ersten Industrieroboter zu bearbeitendes Werkstück. Ebenso liegt es im Rahmen der Erfindung, insbesondere als vorteilhafte Ausgestaltung des Verfahrens, einen räumlichen Bereich dem zweiten virtuellen Modell zuzuordnen.

Zumindest das erste virtuelle Modell wird wiederholt abhängig von dem ersten realen Objekt aktualisiert, insbesondere hinsichtlich der Position und/oder Konfiguration und/oder Dynamik des ersten realen Objektes.

Wesentlich ist weiterhin, dass in Bezug auf das erste virtuelle Modell und/oder in Bezug auf das zweite virtuelle Modell mindestens ein geometrischer Trigger vorgegeben wird. Der Trigger umfasst mindestens eine geometrische Entscheidungsgröße, mindestens eine Auslösebedingung und mindestens eine Aktion. Weiterhin wird der Trigger wiederholt überprüft und abhängig von der Entscheidungsgröße bei Eintreten der Auslösebedingung die Aktion ausgeführt. Die Aktion ist ein Verändern des ersten und/oder zweiten virtuellen Modells und/oder ein Steuern zumindest des ersten realen Objekts.

Mehrachsige automatisierte Handhabungsgeräte finden vielerlei Anwendung in Industrie und Forschung, insbesondere bei automatisierten Handhabungs- bzw. Herstellungsprozessen. Ein typisches mehrachsiges automatisiertes Handhabungsgerät ist ein Industrieroboter, insbesondere finden sechsachsige Industrieroboter breite Verwendung. Je nach Anwendungsgebiet kann Ausgestaltung und Größe des Handhabungsgerätes stark variieren. Der Begriff Handhabungsgerät bezieht sich hierbei vorzugsweise auf Handhabungsgeräte mit einer ortsfesten Basis. Ebenso liegt es aber auch im Rahmen der Erfindung, das Verfahren zur Steuerung von Handhabungsgeräten mit beweglicher Basis, insbesondere selbstfahrenden Handhabungsgeräten anzuwenden, wobei die Steuerung in diesem Fall vorzugsweise auch die Steuerung des Verfahrens, d.h. der Fortbewegung des selbstfahrenden Handhabungsgerätes umfasst.

Im Sinne des erfindungsgemäßen Verfahrens stellt das Handhabungsgerät ein erstes reales Objekt dar, dem ein erstes virtuelles Modell zugeordnet ist. Für mindestens ein weiteres Objekt, wie beispielsweise ein Werkstück, ein weiteres Handhabungsgerät und/oder einen Raumbereich ist ein zweites virtuelles Modell definiert. Weiterhin werden zumindest das erste virtuelle Modell und vorzugsweise auch das zweite virtuelle Modell wiederholt abhängig von dem jeweils zugeordneten realen Objekt aktualisiert. Die Aktualisierung kann hierbei hinsichtlich der Position erfolgen und/oder der Konfiguration, d. h. der Ausrichtung des realen Objekts oder einzelner Elemente des realen Objektes und/oder der Dynamik, d. h. Bewegungsgeschwindigkeit und Bewegungsrichtung des realen Objektes oder einzelner Elemente desselben. Bei dem erfindungsgemäßen Verfahren erfolgt somit wiederholt ein Abgleich des oder der virtuellen Modelle mit den jeweils zugeordneten realen Objekten.

Weiterhin wird im Gegensatz zum Stand der Technik mindestens ein geometrischer Trigger definiert. Der Begriff "geometrisch" bedeutet hierbei, dass der Trigger eine geometrische Entscheidungsgröße umfasst. Die geometrische Entscheidungsgröße ist abhängig von der räumlichen Position eines oder mehrerer Elemente des ersten und/oder des zweiten virtuellen Modells definiert. Der geometrische Trigger umfasst weiterhin eine Auslösebedingung und eine Aktion, wobei die Auslösebedingung ein Kriterium abhängig von der Entscheidungsgröße darstellt, so dass die Aktion dann ausgeführt wird, wenn die Entscheidungsgröße das durch die Auslösebedingung definierte Kriterium erfüllt. Hierzu umfasst die Aktion mehrere Befehle, insbesondere Steuerbefehle für das Handhabungsgerät. Insbesondere bewirkt das Ausführen der Aktion ein Verändern des ersten und/oder zweiten virtuellen Modells und/oder ein Steuern zumindest des ersten realen Objektes.

Mit dem geometrischen Trigger werden vorzugsweise räumliche Abstände überwacht. Dies bedeutet, dass beispielsweise der räumliche Abstand zwischen dem ersten und dem zweiten virtuellen Modell überwacht wird, dem ein tatsächlicher räumlicher Abstand zwischen dem Handhabungsgerät als erstes reales Objekt und der entsprechenden realen Zuordnung des zweiten virtuellen Modells, d. h. eines räumlichen Bereiches oder eines zweiten realen Objektes, entspricht.

Ebenso liegt es im Rahmen der Erfindung, dass mittels des geometrischen Triggers alternativ oder zusätzlich zu einem räumlichen Abstand räumliche Verhältnisse, wie beispielsweise Winkelverhältnisse zwischen vorgegebenen Körpern bzw. Flächen des ersten virtuellen Modells einerseits und des zweiten virtuellen Modells andererseits überwacht werden.

Die Steuerung des Handhabungsgerät mittels des geometrischen Triggers erfolgt ereignisbasiert durch Verwendung ereignisbasierter Programmierung.

Das erfindungsgemäße Verfahren realisiert somit die Abbildung des Handhabungsgerätes und mindestens eines weiteren realen Objektes in virtuellen Modellen während der Bewegung bzw. des Steuervorganges des Handhabungsgerätes und verarbeitet damit erstmals räumliche information und Zusammenhänge bei der Programmierung und während der Programmausführung eines Handhabungsgerätes. Das virtuelle Modell dient somit nicht dazu, im Vorfeld eine Bewegung des Handhabungsgerätes zu generieren, vielmehr wird parallel zumindest während der wiederholten Aktualisierungen des virtuellen Modells ein virtuelles Abbild der Realität geschaffen und Kriterien für die Steuerung können daher in dem virtuellen Modell vorgegeben, definiert und überprüft werden.

Das erfindungsgemäße Verfahren umfasst daher geometrische Trigger, welche in dem virtuellen Modell Kriterien für die Steuerung des ersten realen Objekts und/oder der Anpassung eines virtuellen Modells vorgeben.

Hierdurch ist eine grundverschiedene, neuartige Programmierung eines Handhabungsgerätes verglichen mit den bisher bekannten Verfahren zur Steuerung eines Handhabungsgerätes möglich:

Es werden ein oder mehrere geometrische Trigger vorgegeben, welche Aktionen bei Eintreten bestimmter räumlicher Konstellationen vorschreiben. Dies erfolgt unabhängig davon, ob im Betrieb des Handhabungsgerätes solch eine räumliche Konstellation tatsächlich eintritt oder nicht. Durch die Steuerung der Bewegung des Handhabungsgerätes und/oder des weiteren Objektes in Echtzeit, umfassend die Interaktion mit den virtuellen Modellen von Handhabungsgerät und weiterem Objekt sowie dem virtuellen Modell der Umgebung ist es auf einzigartige Weise möglich, Bewegungsänderungen von Handhabungsgerät und/oder weiterem Objekt durchzuführen, um beispielsweise bei der Programmierung nicht berücksichtigte und nicht berücksichtigbare Ereignisse frühzeitig zu erkennen und eine entsprechende Lösung für das aufgetretene Ereignis mittels der Steuerung zu erstellen und die Bewegungen von Handhabungsgerät und/oder weiterem Objekt in der Umgebung zu koordinieren. Das virtuelle Modell von Handhabungsgerät, weiterem Objekt und der Umgebung wird dabei an die aktuellen Gegebenheiten angepasst. Diese virtuellen Modelle dienen dann als Grundlage für die Steuerung von Handhabungsgerät und/oder weiterem Objekt, insbesondere kann damit bereits frühzeitig und zuverlässig beispielsweise eine Kollision zwischen dem Handhabungsgerät und dem weiteren Objekt vermieden werden. Der Eingriff eines Benutzers in den laufenden Arbeitsablauf ist nicht mehr notwendig.

Weiterhin werden die geometrischen Trigger wiederholt überprüft. Im Gegensatz hierzu erfolgt bei den im Stand der Technik bekannten prozeduralen Programmen eine vorgesehene Abfrage lediglich an einer fest vorgegebenen Position in der vorgegebenen Befehlsabfolge. Bei dem erfindungsgemäßen Verfahren werden die geometrischen Trigger hingegen wiederholt überprüft, ohne dass eine feste Position in einer Abfolge von Befehlen vorgegeben ist.

Die vorliegende Erfindung stellt somit ein Verfahren zur Verfügung, wobei zur Programmierung von Arbeitsabläufen des Handhabungsgerätes und/oder eines weiteren Objektes neue Programmiermechanismen, die auf virtuellen Modellen aufbauen, verwendet werden. Hierbei kann der Benutzer sowohl auf die Programmiermechanismen zugreifen, als auch direkt auf das virtuelle Modell. Hierdurch wird die Programmierung für den Benutzer des Handhabungsgerätes für viele Anwendungsfelder deutlich flexibler und zugleich einfacher.

Das Verfahren wird Vorzugsweise auf und durch einen Steuerrechner durchgeführt, in dem ebenfalls die virtuellen Modelle definiert sind. Der Steuerrechner ist vorzugsweise über bekannte Verbindungen mit dem Handhabungsgerät zur Übertragung der Steuersignale an das Handhabungsgerät und gegebenenfalls Übertragung von Sensordaten an den Steuerrechner verbunden, beispielsweise elektrische Steuerleitungen oder kabellose Verbindungen.

In einer vorteilhaften Ausführungsform des erfindungsgemäßen Verfahrens ist zusätzlich mindestens ein weiteres virtuelles Modell definiert, dem kein gegenständliches reales Objekt zugeordnet ist. Solch ein virtuelles Modell kann beispielsweise ein räumlicher Bereich sein, der in der Realität einem möglichen Aufenthaltsbereich eines Benutzers entspricht, so dass dem virtuellen Modell kein gegenständliches reales Objekt zugeordnet ist. Insbesondere ist es vorteilhaft, diesem virtuellen Modell einen geometrischen Trigger zuzuordnen, welcher als Entscheidungsgröße den Abstand des virtuellen Modells des Handhabungsgerätes zu der nächst liegenden Oberfläche des virtuellen Modells aufweist und als Auslösebedingung einen Mindestabstand, beispielsweise einen Abstand größer 0. Als Aktion kann diesem Trigger ein Abstoppen des Handhabungsgerätes oder vorzugsweise ein Umfahren des räumlichen Bereiches durch Verfahren des Handhabungsgerätes parallel zu der nächstliegenden Oberfläche des virtuellen Modells zugeordnet werden. Durch die Definition solcher virtuellen Modelle, denen kein gegenständliches reales Objekt zugeordnet ist, können somit in einfacher Weise reale räumliche Bereiche angegeben werden, in denen sich das Handhabungsgerät in bestimmter Weise verhält, insbesondere, in die sich das Handhabungsgerät nicht hineinbewegt, indem das Handhabungsgerät diese Bereiche umfährt.

Vorteilhafterweise sind solche virtuellen Modelle durch einfache geometrische Körper wie beispielsweise Punkte, Quader, Zylinder und/oder Kugeln definiert und repräsentieren somit im virtuellen Modell reale Raumbereiche bzw. -punkte in Form von Punkten, Quadern, Zylindern und/oder Kugeln. Dies ermöglicht zum einen eine einfache Berechnung geometrischer Abstände zu den geometrischen Körpern und verringert somit die Rechenbelastung eines Steuerrechners und zum anderen bieten solche geometrisch einfachen Modelle eine für den Menschen einfacher verständliche und vorstellbare Darstellungform, wenn er diese Raumbereich mit Triggern und Aktionen über die von einer Schnittstelle des erfindungsgemäßen Verfahrens bereitgestellten Befehle verknüpfen möchte.

Beispielsweise kann eine Bewegung des Handhabungsgerätes dadurch realisiert werden, dass an einem Startpunkt mittels eines zugeordneten Triggers eine Bewegung in eine erste Richtung vorgegeben wird und an einem zweiten Ortspunkt oder in einem vom Starpunkt räumlich entfernten zweiten Raumbereiches mittels eines Triggers eine zweite Bewegungsrichtung des Handhabungsgerätes bei Erreichen des zweiten Ortspunktes bzw. Eintritt in den zweiten Raumbereich vorgegeben wird. Ebenso liegt es im Rahmen der Erfindung, dass die dem Startpunkt zugeordnete Aktion bereits Steuerbefehle zum Abfahren einer komplexen Bahn beinhaltet.

Ebenso liegt es im Rahmen der Erfindung, dass zwei oder mehr virtuelle Modelle einander räumlich überlappen und/oder ein virtuelles Modell ein oder mehrere virtuelle Modelle räumlich umfasst. Insbesondere liegt es im Rahmen der Erfindung, mehrere virtuelle Modelle zu definieren, denen kein reales gegenständliches Objekt zugeordnet ist, wobei sich diese virtuellen Modelle beliebig überlappen oder einander vollständig beinhalten können. Weiterhin liegt es im Rahmen der Erfindung, virtuelle Modelle zu definieren, denen zwar ein gegenständliches räumliches Objekt zugeordnet ist, wobei die virtuellen Modelle jedoch nicht die exakten geometrischen Abmessungen der realen gegenständlichen Objekte darstellen. Insbesondere ist es vorteilhaft, wenn virtuelle Modelle räumliche Umhüllungen der realen gegenständlichen Objekte sind, beispielsweise einfache geometrische Körper wie z. B. Quader, Zylinder und/oder Kugeln, welche die Umhüllung eines realen gegenständlichen Objektes mit komplexer Körperform sind.

Die virtuellen Modelle des erfindungsgemäßen Verfahrens stehen in einer räumlichen Beziehung zueinander. Dies wird vorzugsweise dadurch gewährleistet, dass für sämtliche virtuellen Modelle ein absolutes räumliches Koordinatensystem vorgegeben wird und die virtuellen Modelle entsprechend Koordinaten bezüglich Ihrer Position umfassen.

In einer weiteren vorteilhaften Ausgestaltung umfassen die virtuellen Modelle zusätzlich und/oder alternativ zu absoluten räumlichen Koordinaten relative räumliche Koordinaten zu mindestens einem weiteren virtuellen Modell und/oder zu mindestens einem Element eines weiteren virtuellen Modells.

Insbesondere ist es vorteilhaft, dass die virtuellen Modelle in einer hierarchischen Modellstruktur definiert sind, wobei mehrere virtuelle Modelle einem gemeinsamen, übergeordneten Knoten zugeordnet sein können und dem Knoten mindestens eine Eigenschaft zugeordnet ist. Hierdurch ist es beispielsweise möglich, mehrere virtuelle Modelle, welche jeweils Einzelelementen eines komplexen realen Objektes entsprechen, einem gemeinsamen übergeordneten Knoten zuzuordnen und diesem Knoten Eigenschaften zuzuordnen, welche für das gesamte komplexe reale Objekt zutreffen.

Beispielsweise kann ein reales Objekt in mehrere geometrische Körper zergliedert werden und jedem dieser geometrischen Körper ein virtuelles Modell zugeordnet werden. Diesen virtuellen Modellen wird ein gemeinsamer Knoten zugeordnet, welcher als Eigenschaft absolute räumliche Koordinaten aufweist. Die virtuellen Modelle der Einzelelemente hingegen weisen lediglich relative räumliche Koordinaten auf, welche die Lage der Einzelelemente relativ zu den absoluten räumlichen Koordinaten des Knotenpunktes darstellen. Ebenso liegen weitere Hierarchiestrukturen für weitere Eigenschaften im Rahmen der Erfindung.

Weiterhin ist bei dem erfindungsgemäßen Verfahren eine Schnittstelle vorgesehen, mittels derer ein oder mehrere Trigger definierbar und/oder veränderbar sind und/oder mittels derer virtuelle Objekte erstellbar und/oder veränderbar sind. Die Schnittstelle ermöglicht somit einen Zugriff auf die virtuellen Objekte und die insbesondere zur Steuerung verwendeten Trigger, wobei vorteilhafterweise die Schnittstelle eine Sammlung von Befehlen umfasst, mittels derer die Trigger definierbar und/oder veränderbar sind und/oder mittels derer virtuelle Objekte erstellbar und/oder veränderbar sind.

Vorzugsweise erfolgt die Steuerung des Handhabungsgerätes mittels einer Datenverarbeitungseinheit, insbesondere eines handelsüblichen Computers und die Schnittstelle stellt dementsprechend eine Sammlung von Programmierbefehlen dar, mittels derer auf die in der Datenverarbeitungseinheit definierten virtuellen Modelle zugegriffen und zu diesen virtuellen Modellen Trigger definiert werden können.

Insbesondere ist es vorteilhaft, dass die Schnittstelle von einem Benutzer mittels eines Eingabegerätes bedienbar ist. Die Bezeichnung "Benutzer" bezieht sich dabei auf den Anwender des Handhabungsgerätes bei dem Handhabungs- oder Herstellungsprozess. Vorteilhafterweise werden herstellerseitig Grunddefinitionen vorgenommen, beispielsweise die Definition des virtuellen Modells des Handhabungsgerätes und Mechanismen zur Aktualisierung dieses virtuellen Modells beispielsweise mittels an dem realen Handhabungsgerät angeordneter Sensoren. Dem Benutzer wird vorteilhafterweise zusätzlich eine Schnittstelle in Form einer Sammlung von Programmierbefehlen zur Verfügung gestellt werden, mittels derer er Trigger definieren kann und insbesondere auf die Steuerung des Handhabungsgerätes einwirken kann. Hierdurch können Änderungen in der Steuerung des Handhabungsgerätes unmittelbar durch den Benutzer vorgenommen werden, ohne dass herstellerseitig eine komplette Neuprogrammierung der Steuerung erfolgen muss. Vorteilhafterweise ist die Schnittstelle derart ausgeführt, dass der Benutzer lediglich in begrenztem Umfang Änderungen vornehmen kann, so dass unabänderbare Grundeinstellungen und/oder Programmierungen durch den Hersteller vorgebbar sind. Insbesondere ist die Schnittstelle vorteilhafterweise derart ausgeführt, dass der Benutzer lediglich eine beschränkte Art von Typen von geometrischen Triggern, beispielsweise lediglich Trigger mit Abstandsvariablen als Entscheidungsgröße vorgeben kann und/oder dass der Benutzer lediglich für vorgegebene virtuelle Objekte Trigger definieren kann.

Weiterhin ist es vorteilhaft, dass die Schnittstelle durch einen realen Sensor abhängig von mindestens einem Sensormesssignal bedienbar ist. Typischerweise wird die Umgebung des Handhabungsgerätes Sensoren zur Lage und Positionserkennung weiterer Objekte und zur Konfigurationserkennung des Handhabungsgerätes umfassen. Bei dem erfindungsgemäßen Verfahren ist es somit in einfacherer Weise möglich, für Sensoren über die beschriebene Schnittstelle eine Verbindung zu zugeordneten virtuellen Objekten zu schaffen, so dass beispielsweise die Existenz (d.h. das Generieren oder Löschen eines virtuellen Objektes) und/oder die Lage und/oder die Form und/oder Konfiguration eines virtuellen Objektes abhängig von den Sensorsignalen an die Existenz (d.h. das Generieren oder Löschen eines virtuellen Objektes) und/oder die Lage und/oder die Form und/oder Konfiguration eines realen Objektes angepasst wird und somit eine Aktualisierung der virtuellen Modelle erfolgt. Vorteilhafterweise erfolgt während der manuellen Steuerung durch den Benutzer gleichzeitig die Überprüfung sämtlicher oder einer vorgegebenen Auswahl der geometrischen Trigger, so dass beispielsweise eine Kollision auch während der manuellen Steuerung durch den Benutzer durch geometrische Trigger unterbunden wird.

Vorteilhafterweise ist die Schnittstelle mit einer Handsteuervorrichtung verbunden, mittels derer ein Handverfahren des Handhabungsgerätes durch den Benutzer möglich ist, wobei die Handsteuervorrichtung die manuell durch den Benutzer vorgegebenen Steuersignale in entsprechende Steuerbefehle der Schnittstelle umsetzt. Hier zeigt sich ein weiterer Vorteil des erfindungsgemäßen Verfahrens: Die Überprüfung der vorgegebenen geometrischen Trigger erfolgt unabhängig davon, ob die aktuelle Bewegungssteuerung aufgrund einer vorprogrammierten Aktion oder aufgrund einer Handsteuerung durch den Benutzer erfolgt.

Vorteilhafterweise erfolgt die Aktualisierung zumindest des ersten virtuellen Modells in Echtzeit. Typische Handhabungsgeräte weisen Taktraten auf, innerhalb derer Steuerbefehle abgearbeitet und Sensoren zur Lage oder Konfigurationserkennung abgefragt werden. Bei solchen Handhabungsgeräten wird mit dem Begriff "Echtzeit" typischerweise die kleinste Taktrate bezeichnet, mittels derer Steuerbefehle gegeben bzw. Sensordaten ausgelesen werden. Vorzugsweise erfolgt die Aktualisierung daher mit einer vorgegebenen ersten Taktrate, insbesondere mit der kleinsten im Steuerungssystem verwendeten Taktrate.

Zweckmäßigerweise werden die virtuellen Modelle des Handhabungsgerätes, des weiteren Objektes sowie der Umgebung somit in Echtzeit angepasst. Damit ist ein permanentes, jederzeit aktuelles realistisches Abbild bzw. virtuelles Modell von Handhabungsgerät, weiterem Objekt, und der Umgebung verfügbar und gewährleistet. Damit wird ein Höchstmaß an Zuverlässigkeit bei der Steuerung des Handhabungsgerätes und/oder weiterem Objekt erzielt.

Vorteilhafterweise wird der Trigger mit einer vorgegebenen Taktrate überprüft, insbesondere mit der gleichen Taktrate, mit der das erste virtuelle Modell aktualisiert wird. Hierdurch ist gewährleistet, dass bei jeder möglichen Änderung des virtuellen Modells eine Überprüfung erfolgt, ob diese Änderung gegebenenfalls zu einer Erfüllung der Auslösebedingung des Triggers führt. Hierin besteht ein weiterer wesentlicher Unterschied zu der aus dem Stand der Technik bekannten prozeduralen Programmierung eines Handhabungsgerätes: Während bei der prozeduralen Programmierung etwaige Abfragen lediglich an den fest im Programm vorgesehenen Stellen erfolgen, wird bei dieser vorteilhaften Ausführungsform des erfindungsgemäßen Verfahrens der Trigger mit einer vorgegebenen Taktrate überprüft, so dass ein Reagieren auf Ereignisse unabhängig vom aktuellen Stand des Bewegungs- oder Arbeitsablaufes des Handhabungsgerätes möglich ist.

In einer weiteren vorteilhaften Ausführungsform wird der Trigger mit einer vorgegebenen zweiten Taktrate überprüft, welche unterschiedlich zu der ersten Taktrate ist. Hierdurch ist es möglich, dem Trigger beispielsweise eine niedrigere Taktrate, verglichen mit der Aktualisierung des virtuellen Modells zuzuordnen, so dass Rechenzeit eingespart wird und somit die Belastung der Datenverarbeitungseinheit verringert wird. Insbesondere bei Definition mehrerer Trigger ist es vorteilhaft, den Triggern unterschiedliche Taktraten zuzuordnen, so dass über die jeweils einem Trigger zugeordnete Taktrate eine Gewichtung hinsichtlich der Relevanz dieses Triggers erfolgt: Trigger, welche besonders kritische räumliche Konstellationen überwachen, können entsprechend häufig überprüft werden, und entsprechend kann Triggern mit unkritischeren räumlichen Bedingungen eine dem gegenüber geringere Taktrate zugeordnet werden, um die Rechenbelastung der Datenverarbeitungseinheit zu verringern.

Insbesondere ist es vorteilhaft, die Taktrate eines oder mehrere Trigger dynamisch anzupassen, insbesondere abhängig von geometrischen Abständen die Taktrate zu ändern, vorzugsweise für sich verringernde geometrische Abstände die Taktraten zu erhöhen und umgekehrt. Hier zeigt sich eine weiterer Vorteil der Flexibilität des erfindungsgemäßen Verfahrens: Vorzugsweise wird ein weiterer geometrischer Trigger definiert, welcher als Entscheidungsgröße den Abstand zwischen zwei vorgegebenen virtuellen Objekten umfasst. Als Aktion ist diesem Trigger eine Veränderung der Taktrate für die Überprüfung eines anderen geometrischen Triggers zugeordnet. Hierdurch ist es möglich, einerseits die Rechenbelastung des Steuerrechners durch geringere Taktraten zu verringern und andererseits bei sich annähernden Objekten die Taktraten relevanter Trigger zu erhöhen, so dass die Überwachung dieser Objekte bei unterschreiten eines vorgegebenen Mindestabstandes aufgrund der verringerten Taktratehäufiger erfolgt und somit eine möglichst schnelle Reaktion für sich annähernde Objekte sichergestellt ist, d.h. Ausführen der Aktion der diesen Objekten zugeordneten Trigger.

Vorteilhafterweise werden die virtuellen Modelle anhand von Simulationsystemen und/oder von Sensordaten erstellt und angepasst. Diese stellen unaufwändige Verfahren zur Erzeugung der virtuellen Modelle dar, verglichen mit der Handeingabe sämtlicher notwendiger Daten eines virtuellen Modells in die Datenverarbeitungseinheit.

Weiter ist es vorteilhaft, wenn die virtuellen Modelle anhand von Simulationssystemen und/oder anhand von Sensordaten erstellt und angepasst werden. Sind bereits zuvor Simulationen mit dem Handhabungsgerät und/oder dem weiteren Objekt vorgenommen worden, können auf einfache Weise die Modelle aus dem Simulationssystem für das virtuelle Modell von Handhabungsgerät, weiterem Objekt und Umgebung verwendet werden. Ein erneutes aufwendiges Erstellen eines neuen virtuellen Modells entfällt damit. Daneben ist es auch möglich, die virtuellen Modelle anhand von Sensordaten zu erstellen oder anzupassen. Werden Sensoren am Handhabungsgerät, und/oder am weiteren Objekt und/oder in der Umgebung angeordnet und mit der Steuerung für eine Datenübermittlung verbunden, kann die Steuerung für das Handhabungsgerät und/oder das weitere Objekt in Echtzeit auf einfache Weise die die Grundlage für die Steuerung bildenden virtuellen Modelle an die aktuelle Situation bzw. Position von Handhabungsgerät, und weiterem Objekt in der Umgebung laufend anpassen. Zur Erhöhung der Genauigkeit der virtuellen Modelle können die Daten zur Anpassung und Erstellung der virtuellen Modelle sowohl aus Simulationssystemen als auch anhand von Sensordaten erstellt bzw. angepasst werden.

Mit dem erfindungsgemäßen Verfahren ist es somit erstmals möglich, eine neue Art von Befehlen, so genannte ereignisbasierte Befehle für die Programmierung zu verwenden. Neben den bisher üblichen prozeduralen Befehlen für die Steuerung von Handhabungsgeräten und weiteren Objekten, beispielsweise dem Befehl des Anfahrens eines bestimmten Punktes, ist es nun möglich, ereignisabhängig das Handhabungsgerät und/oder das weitere Objekt zu steuern. Erhält beispielsweise das Handhabungsgerät durch die Steuerung den Befehl, das Endelement des Handhabungsgerätes, welches beispielsweise mit einem Werkzeug bestückt ist, von einem räumlichen Punkt zu einem anderen räumlichen Punkt zu fahren und wird hierbei eine Triggerauslösebedingung erfüllt, so wird die diesem Trigger zugeordnete Aktion ausgeführt, welche insbesondere einen Einfluss auf die Bahn- und Bewegungsart des Handhabungsgerätes bewirkt.

So kann beispielsweise ein virtuelles Modell eines räumlichen Objektes definiert werden und hierzu ein Trigger, welcher als Entscheidungsgröße den Abstand des Handhabungsgerätes, insbesondere eines an dem Handhabungsgerät angebrachten Werkzeuges zu dem räumlichen Objekt beinhaltet und als Auslösebedingung einen vorgegebenen Mindestabstand. Unterschreitet das Werkzeug des Handhabungsgerätes den vorgegebenen Mindestabstand, so wird die dem Trigger zugeordnete Aktion ausgeführt. Im einfachsten Fall kann dies ein Anhalten des Handhabungsgerätes sein, so dass eine Kollision vermieden wird. Vorzugsweise umfasst die Aktion jedoch komplexere Steuerungsbefehle, welche eine Bewegungsänderung bewirken, die nicht eine Beenden der Bewegung ist, sondern eine Änderung der Bewegungsbahn bewirkt, beispielsweise eine Bewegung parallel zur nächstliegenden Oberfläche des virtuellen Objektes, um eine Umfahrung dieses Objektes zu erreichen.

Typischerweise erfolgt die Steuerung des Handhabungsgerätes über eine Abfolge von Steuerbefehlen. Bei den vorbekannten Verfahren wird eine rein prozedurale Programmierung verwendet, d. h die Befehlsabfolge ist unabänderbar vorgegeben, lediglich bei Eintreten vorgegebener Rahmenbedingungen erfolgt ein Anhalten des Handhabungsgerätes, d. h. ein Beenden des Abarbeitens der Abfolge von Steuerbefehlen. Bei dem erfindungsgemäßen Verfahren ist hingegen jedem Trigger eine Aktion zugeordnet, welche vorteilhafterweise eine für die Aktion vorgegebene Abfolge von Steuerbefehlen für das Handhabungsgerät umfasst. Es ist jedoch keineswegs vorgegeben, ob und gegebenenfalls in welcher Reihenfolge die einzelnen Aktionen, d. h. die den jeweiligen Aktionen zugeordneten Steuerbefehle zur Steuerung des Handhabungsgerätes Anwendung finden. Dies ist ereignisabhängig, d. h. abhängig davon, ob für den der Aktion zugeordneten Trigger die Entscheidungsgröße die Auslösebedingung bei Überprüfung dieses Triggers erfüllt. Bei dieser vorteilhaften Ausführungsform existiert somit keine vorgegebnen Abfolge von Steuerbefehlen, hingegen sind einzelne Aktionen definiert, welche jeweils eine vorgegebene Abfolge von Steuerbefehlen zur Bewegungssteuerung des Handhabungsgerätes umfassen. Abhängig von der jeweiligen räumlichen Konstellation werden dann eine oder mehrere Aktionen mit den zugeordneten Abfolgen von Steuerbefehlen zur Bewegungssteuerung ausgeführt, so dass die durch die Trigger vordefinierten Bedingungen die letztendlich ausgeführte Bewegung des Handhabungsgerätes definieren.

Das erfindungsgemäße Verfahren eröffnet die Möglichkeit, dass die Bewegung des Handhabungsgerätes ausschließlich über geometrische Trigger und deren zugeordnete Aktionen erfolgt. Ebenso liegt jedoch auch eine Kombination der herkömmlichen prozeduralen Steuerung mit der ereignisorientierten Steuerung durch Definition geometrischer Trigger im Rahmen der Erfindung: In einer vorteilhaften Ausführungsform ist eine herkömmliche prozedurale Abfolge von Steuerbefehlen zur Bewegungssteuerung des Handhabungsgerätes definiert. Zusätzlich sind jedoch wie zuvor beschrieben virtuelle Modelle und mindestens ein geometrischer Trigger definiert, dessen zugeordnete Aktion eine Steuerung des Handhabungsgerätes ist. Die Steuerung erfolgt somit zunächst aufgrund der prozedural vorgegebenen Befehlsfolge, sobald jedoch die Auslösebedingung des geometrischen Triggers erfüllt wird, erfolgt die Ausführung der dem Trigger zugeordneten Aktion anstelle der prozeduralen Steuerbefehle. Die dem Trigger zugeordnete Aktion kann hierbei die komplette Bewegungssteuerung des Handhabungsgerätes vorgeben, ebenso ist jedoch auch nur eine Teilvorgabe möglich, beispielsweise eine Geschwindigkeitsvorgabe oder die Vorgabe der Orientierung eines Werkzeuges des Handhabungsgerätes. Sobald die Aktion abgeschlossen ist und/oder die Auslösebedingung des geometrischen Triggers nicht mehr erfüllt ist, erfolgt die Steuerung wieder vollständig durch die vorgegebene prozedurale Befehlsabfolge.

Vorteilhafterweise umfassen die Aktionen Steuerbefehle, welche die Bahn des Handhabungsgerätes, d. h. insbesondere die Positionsänderung eines an dem Handhabungsgerät angebrachten Werkzeuges beeinflussen. Bei dem erfindungsgemäßen Verfahren erfolgt somit bei der beschriebenen vorteilhaften Ausführungsform abhängig von der jeweils ausgeführten Aktion eine Bahnänderung des Handhabungsgerätes, bzw. des Werkzeuges des Handhabungsgerätes. Bei den vorbekannten Steuerungsverfahren ist die Bahn des Handhabungsgerätes fest vorgegeben. Bei dem erfindungsgemäßen Verfahren ergibt sich die Bahn des Handhabungsgerätes erst bei der tatsächlichen Anwendung abhängig von den dann auftretenden Ereignissen. Es ist bei dem erfindungsgemäßen Verfahren somit nicht notwendig, die Bahn des Handhabungsgerätes im Vorfeld gegenüber allen möglichen räumlichen Konstellationen zu überprüfen, vielmehr ist es lediglich notwendig, über eine entsprechende Definition von Triggern Aktionen, d. h. Abfolgen von Steuerbefehlen zur Bewegungssteuerung des Handhabungsgerätes als Reaktion auf die aktuelle bestehende räumliche Konstellation vorzugeben.

Bei dem erfindungsgemäßen Verfahren erfolgt somit eine strukturelle Änderung des Steuerprogramms, d. h. der Abfolge von Steuerbefehlen des Handhabungsgerätes während der Anwendung, abhängig von den jeweils auftretenden Ereignissen und hierdurch ausgeführten Aktionen der jeweiligen Trigger.

Vorteilhafterweise umfasst die dem geometrischen Trigger zugeordnete Aktion daher Steuerbefehle, welche eine Bahnänderung der Bewegung des Handhabungsgerätes bewirken. Der Begriff "Bahnänderung" bezeichnet hier vorzugsweise eine Änderung, die nicht lediglich ein Beenden der Bewegung, sondern ein Modifizieren der Bewegungsbahn ist. Vorteilhafterweise umfasst die dem geometrischen Trigger zugeordnete Aktion Befehle, welche eine Bahnänderung abhängig von einem oder mehreren virtuellen Modellen bewirken. Insbesondere ist es vorteilhaft, dass die Aktion Befehle umfasst, welche eine Bahnänderung in einem vorgegebenen geometrischen Bezug zu dem zweiten virtuellen Modell bewirkt, vorzugsweise in einem vorgegebenen Abstand zu mindestens einer Oberfläche des virtuellen Models, insbesondere ein Verfahren parallel zu dieser Oberfläche.

Ebenso liegt es im Rahmen der Erfindung, dass eine Aktion nicht nur eine Bahnänderung des Handhabungsgerätes umfasst, es kann alternativ oder zusätzlich eine alternative Aufgabe für das Handhabungsgerät vorgegeben werden. Hierdurch ist es beispielsweise möglich, dass mittels eines Triggers überprüft wird, ob sich im Arbeitsbereich des Handhabungsgerätes ein weiteres Handhabungsgerät befindet und für diesen Fall eine alternative Aufgabe des ersten Handhabungsgerätes vorzugeben, die dieses so lange ausführt, bis das zweite Handhabungsgerät den Arbeitsbereich des ersten Handhabungsgerätes wieder verlassen hat, worauf das erste Handhabungsgerät wieder zu seiner ursprünglichen Aufgabe zurückkehrt.

In einer weiteren vorzugsweisen Ausführungsform umfasst die Aktion ein Erzeugen und/oder ein Verändern des ersten und/oder zweiten virtuellen Modells und weiterhin zusätzlich die Definition eines weiteren geometrischen Triggers, mit Bezug zu dem erzeugten und/oder veränderten Modell. Hierdurch werden somit ereignisabhängig weitere geometrische Trigger erzeugt. In einer vorteilhaften Ausführungsform wird mittels einer oder mehrerer Sensoren eine Objekterkennung durchgeführt und abhängig von den ermittelten geometrischen Ausmaßen des untersuchten Objektes ein virtuelles Modell zu diesem Objekt erzeugt und zusätzlich ein geometrischer Trigger für dieses neue virtuelle Modell definiert, welcher beispielsweise die Einhaltung eines vorgegebenen Abstandes zwischen Handhabungsgerät und untersuchtem Objekt bewirkt.

Die beschriebenen Ausführungsformen zeigen, dass mit dem erfindungsgemäßen Verfahren durch Definition einer oder mehrerer Trigger in allgemeiner Form Lösungsstrategien für möglicherweise auftretende kritische räumliche Konstellationen vorgegebenen werden können, wohingegen die tatsächliche Steuerung des Handhabungsgerätes die möglicherweise auftretenden kritischen Konstellationen jedoch nicht berücksichtigen muss. Vielmehr kann den Handhabungsgerät lediglich eine gewünschte Verfahrrichtung für ein oder bestimmte Elemente des Handhabungerätes vorgegeben werden und im Falle des Eintretens einer kritischen räumlichen Konstellation wird diese aufgrund der definierten Trigger und der zugeordneten Aktionen entsprechend behandelt, beispielsweise durch ein Umfahren eines Objektes.

Vorteilhafterweise umfasst eine einem Trigger zugeordnete Aktion zusätzlich Steuerbefehle wie das Einhalten einer bestimmten Mindest- oder Maximalgeschwindigkeit und/oder eine bestimmte Ausrichtung einzelner Elemente des Handhabungsgerätes oder von an dem Handhabungsgerät angebrachten Objekten, wie beispielsweise Werkzeugen. So kann beispielsweise ein Trigger definiert werden, welcher in einem durch ein virtuelles Modell vorgegebenen räumlichen Bereich eine vorgegebene räumliche Orientierung eines bestimmten Elementes des Handhabungsgerätes bewirkt, beispielsweise dass ein von dem Handhabungsgerät gehaltenes Werkstück in diesem räumlichen Bereich immer waagerecht gehalten wird oder immer in einem vorgegebenen geometrischen Bezug (beispielsweise parallel) zu einer Oberfläche eines anderen virtuellen Objektes ausgerichtet wird.

Typischerweise weist ein geometrischer Trigger eine Entscheidungsgröße und eine Auslösebedingung auf. Für bestimmte Konstellationen und bestimmte Überwachungen ist es jedoch vorteilhaft, wenn ein geometrischer Trigger mehrere Entscheidungsgrößen umfasst und für jede Entscheidungsgröße jeweils eine Einzelauslösebedingung definiert ist. Bei Überprüfung des Triggers erfolgt somit eine Evaluierung jeder Einzelauslösebedingung, so dass für jede der Einzelauslösebedingungen und somit auch für jede der Entscheidungsgrößen jeweils ein Evaluierungsergebnis vorliegt. Weiterhin ist in dieser vorzugsweisen Ausführungsform für den geometrischen Trigger als Auslösebedingung eine logische Verknüpfung der Einzelauslösebedingungen definiert, so dass aus den Evaluationsergebnissen der Einzelauslösebedingungen anhand der vorgegebenen logischen Verknüpfungen das Gesamtergebnis der Auslösebedingung ermittelt und abhängig von diesem Gesamtergebnis werden die dem geometrischen Trigger zugeordnete Aktion ausgeführt wird.

Aus den vorgehend beschriebenen Beispielen und vorzugsweisen Ausführungsformen wird ein weiterer Vorteil des erfindungsgemäßen Verfahrens ersichtlich: Es kann für beliebige virtuelle Modelle jeweils eine beliebige Anzahl von Triggern definiert werden. Weiterhin können sich virtuelle Modelle räumlich überlappen oder beinhalten. Gegebenenfalls kann somit bei einer räumlichen Konfiguration die Situation eintreten, dass mehrere Auslösebedingungen verschiedener Trigger erfüllt sind und somit mehrere Aktionen gleichzeitig ausgeführt werden. Insbesondere bei der gleichzeitigen Ausführung mehrerer Aktionen ist die nachfolgend beschriebene vorzugsweise Ausführungsform des erfindungsgemäßen Verfahrens mit Überprüfung von eventuellen Widersprüchen in den Aktionen vorteilhaft. Widersprüche sind insbesondere Steuerbefehle, die einander widersprechen, z.B. die gleichzeitige Vorgabe von zwei unterschiedlichen Verfahrgeschwindigkeiten oder zwei unterschiedlichen Orientierungen eines Werkzeuges.

Um zu vermeiden, dass die Steuerung wegen einander widersprüchlicher Steuerungsbefehle, Aktionen und/oder Eigenschaften von Bereichen den gesamten Arbeitsablauf stoppt, ist es vorteilhaft, wenn insbesondere in Echtzeit eine Überprüfung von Befehlen für die Steuerung der Bewegung des Handhabungsgerätes und/oder der Bewegung des weiteren Objektes auf Widersprüche erfolgt. Auf diese Weise wird ein Widerspruch, beispielsweise wenn sich die Maximalgeschwindigkeit, mit der das Handhabungsgerät aus technischen Gründen maximal bewegt werden darf, beim Durchfahren eines Bereichs, welche dem Handhabungsgerät eine über diese Geschwindigkeit liegende Geschwindigkeit erzwingen würde, aufgelöst, d. h. die interaktive Steuerung ermittelt nach bestimmten fest hinterlegten Regeln eine Lösung für diesen Widerspruch. Eine solche Regel kann beispielsweise lauten, dass bei zwei oder mehreren gleichzeitig vorgegebenen, unterschiedlichen Vorgaben stets das Minimum gewählt wird, insbesondere bei mehreren gleichzeitig vorgegeben Geschwindigkeiten stets die kleinste der vorgegebenen Geschwindigkeiten. Vorteilhafterweise umfasst das erfindungsgemäße Verfahren daher eine Liste mit Regeln zur Behandlung von Widersprüchen, es erfolgt eine wiederholte Überprüfung auf Widersprüche und bei Eintreten eines Widerspruches wird die Regelliste auf eine zu diesem Widerspruch passende Regel überprüft und die auszuführende Aktion entsprechend der Vorgabe durch die Regel abgeändert.

In einer vorzugsweisen Ausführungsform werden Widersprüche dadurch gelöst, dass den Aktionen der geometrischen Trigger zusätzlich Prioritäten zugeordnet sind. Von zwei widersprüchlichen, gleichzeitig auszuführenden Aktionen wird in dieser Ausführungsform die Aktion mit der höheren Priorität ausgeführt. Vorteilhafterweise sind zusätzlich Regeln gemäß der vorangegangenen Beschreibung vorgegeben, um Widersprüche bei Aktionen mit gleicher Priorität aufzulösen.

Eine weitere Möglichkeit besteht darin, dass ein derartiger Widerspruch bereits zuvor, sofern dies absehbar ist, bei der Programmierung der Steuerung angezeigt wird und die Programmierung bereits im Vorfeld angepaßt werden kann. Schließlich besteht eine mögliche Lösung des Widerspruchs auch darin, dass einem Bediener rechtzeitig ein entsprechender Widerspruch visuell und/oder optisch oder auf sonstigem Wege übermittelt wird, so dass diesem insbesondere ohne Stoppen des Arbeitsablaufs von Industrieroboter und/oder weiterem Objekt eine Möglichkeit gegeben wird, in die Steuerung einzugreifen und den Widerspruch zu lösen.

Um eine Steuerung bzw. eine Programmierung für einen Bediener weiter wesentlich zu vereinfachen, ist es vorteilhaft, wenn die Steuerung anhand von aufgabenhaft formulierten Befehlen erfolgt. Derartige aufgabenhaft formulierte Befehle können beispielsweise darin bestehen, dem Handhabungsgerät den Befehl zu geben, beliebige Gegenstände innerhalb eines ersten Bereichs zu einem zweiten Bereich zu transportieren. Weder die Anzahl der Gegenstände, noch deren Position müssen dem Bediener bekannt sein. Die Steuerung des Handhabungsgerätes steuert dabei selbständig das Handhabungsgerät derart, dass dieses sämtliche Gegenstände in dem ersten Bereich erfasst, aufnimmt und in den zweiten Bereich transportiert und dort wieder ablegt. Die Steuerung überwacht dabei in Interaktion mit den virtuellen Modellen des Handhabungsgerätes, dem weiteren Objekt und der Umgebung in Echtzeit die Bewegung des Handhabungsgerätes. Im Gegensatz hierzu wäre eine klassische Steuerung eines Roboters derart, dass der Roboter zunächst einen bestimmten Punkt anfährt, das Werkzeug für den Transport in dem Bereich öffnet, der Roboter sich zur Aufnahme des Gegenstandes entsprechend bewegt, das Werkzeug wieder schließt, der Roboter das Objekt anhebt und zu dem neuen Platz verfährt, wobei der Platz wiederum in festen Koordinaten entsprechend angefahren wird und dann das Objekt dort nach Absenken und Lösen des Werkzeugs von dem Objekt in dem zweiten Bereich platziert. Alle diese Informationen müssen dem Bediener vorab bekannt sein, um ein ordnungsgemäßes Transportieren für die Steuerung programmieren zu können. Durch die Möglichkeit der Verarbeitung aufgabenhaft formulierte Befehle ist es für einen Bediener wesentlich einfacher, die Steuerung für das Handhabungsgerät und/oder das weitere Objekt zu programmieren.

Eine Vorrichtung, insbesondere geeignet zur Durchführung des Verfahrens nach Anspruch 1, umfasst zumindest ein Handhabungsgerät, zumindest ein weiteres Objekt, sowie einen Arbeitsraum und einen Steuerrechner zur Steuerung zumindest des einen Handhabungsgerätes, wobei in dem Steuerrechner ein virtuelles Modell des Handhabungsgerätes, des weiteren Objektes sowie der Umgebung, insbesondere des Arbeitsbereichs des Handhabungsgerätes und/oder des weiteren Objektes hinterlegt ist. Der Steuerrechner steuert dabei in Echtzeit die Bewegung des Roboters und/oder des weiteren Objektes, umfassend die Interaktion mit dem virtuellen Modell des Handhabungsgerätes und/oder des weiteren Objektes und der Umgebung.

Um die Bedienung der Vorrichtung für einen Bediener zu vereinfachen, ist es vorteilhaft, wenn der Steuerrechner aufgabenhaft-formulierte Befehle verarbeiten kann und entsprechend selbstständig die Bewegung des Handhabungsgerätes und/oder des weiteren Objektes an die programmierte Aufgabe anpasst. Hierzu können beispielsweise bei der Programmierung der Vorrichtung entsprechende Text- oder Aufgabenbausteine für einen Bediener angezeigt und durch diesen über logische Verbindungen, z.B. einem logischen UND oder ODER ähnlich denen in Internetsuchmaschinen, miteinander verknüpft werden, was ein einfacheres und schnelleres Programmieren des Steuerrechners durch den Bediener ermöglicht.

Besonders vorteilhaft ist es dabei, wenn der Steuerrechner Befehle, insbesondere während deren Ausführung auf Widersprüche überprüft. Wird ein solcher Widerspruch von dem Steuerrechner bei der Ausführung der Befehle festgestellt, so kann ein derartiger Widerspruch bereits einem Bediener durch den Steuerrechner bei der Programmierung des Steuerrechners gemeldet werden. Es ist ebenso möglich, Verfahrensschritte zur Auflösung von Widersprüchen in dem Steuerrechner zu hinterlegen, so dass ein Widerspruch nicht zum Anhalten der Bewegung von Handhabungsgerät und/oder weiterem Objekt also dem gesamten Arbeitsablauf führt, sondern der Steuerrechner sucht anhand der für solche Zwecke im Steuerrechner hinterlegten Befehle in einem solchen Fall selbständig nach einer Lösung zur Auflösung des Widerspruch. Tritt der Widerspruch während einer interaktiven Ausführung des Steuerungsprogramms durch den Steuerrechner auf, ist es ebenso möglich, dem Benutzer einen solchen Widerspruch rechtzeitig anzuzeigen, so dass dieser den Widerspruch lösen kann und zwar so rechtzeitig, dass ein Verlangsamen oder sogar Abstoppen des Programms bzw. Arbeitsablaufs durch den Steuerrechner nicht erfolgen muss.

Vorteilhafterweise führt der Steuerrechner eine Aktion aus und/oder beachtet eine Eigenschaft, wenn das Handhabungsgerät und/oder das weitere Objekt in einen Bereich eintritt, dem eine Eigenschaft und/oder eine Aktion zugeordnet ist. Auf einfache Weise ist es damit möglich, räumliche Bereiche mit bestimmten Eigenschaften und/oder Aktionen zu versehen, so dass eine möglichst flexible und realistische Darstellung der realen Umgebung, des Handhabungsgerätes und des weiteren Objektes durch die entsprechenden im Steuerrechner hinterlegten virtuellen Modelle möglich ist.

Um eine Anpassung der virtuellen Modelle zu ermöglichen sowie eine Interaktion zwischen realer Bewegung des Handhabungsgerätes und/oder des weiteren Objektes sowie relativ zur Umgebung zu ermöglichen, ist zweckmäßigerweise an den Steuerrechner zumindest ein Sensor angeschlossen, welcher geeignet ist zum Ermitteln von Daten zum Anpassen des virtuellen Modells von Handhabungsgerät, weiterem Objekt und Umgebung. Der Sensor ist insbesondere beispielsweise in der Lage, die jeweilige Position sowie Geschwindigkeit von Handhabungsgerät und weiterem Objekt in der Umgebung zu bestimmen. Diese Daten übermittelt der Sensor, insbesondere in Echtzeit an den Steuerrechner, der wiederum das in ihm hinterlegte virtuelle Modell von Handhabungsgerät, weiterem Objekt und Umgebung entsprechend den Daten des Sensors anpasst. Damit ist gewährleistet, dass eine möglichst verzögerungsfreie und detaillierte Darstellung der Umgebung anhand der im Steuerrechner hinterlegten virtuellen Modelle von Handhabungsgerät, weiterem Objekt und Umgebung für die Berechnung der Bewegungen durch den Steuerrechner verwendet wird; eine präzise und zuverlässige Steuerung des Handhabungsgerätes und des weiteren Objektes wird damit erreicht.

Weitere Merkmale und Vorteile der vorliegenden Erfindung ergeben sich aus der nachfolgenden Beschreibung eines Ausführungsbeispiels anhand der Zeichnungen. Dabei zeigt:
- Figur 1: eine erfindungsgemäße Vorrichtung/Verfahren zur Steuerung eines Roboters mit einem räumlichen Bereich, dem eine Aktion zugeord- net ist;
- Figur 2: eine erfindungsgemäße Vorrichtung/Verfahren in einer weiteren Ausgestaltung mit einem räumlichen Bereich als Arbeitsbereich;
- Figur 3: eine erfindungsgemäße Vorrichtung/Verfahren mit einem räumli- chen Bereich als Sicherheits- und Aktionsbereich;
- Figur 4: eine erfindungsgemäße Vorrichtung/Verfahren mit zwei Robotern;
- Figur 5: eine erfindungsgemäße Vorrichtung/Verfahren mit Sensorik und einem räumlichen Bereich mit aufzunehmenden Gegenständen;
- Figur 6: eine erfindungsgemäße Vorrichtung/Verfahren in einer weiteren Ausgestaltung mit einem räumlichen Bereich als Arbeitsbereich.

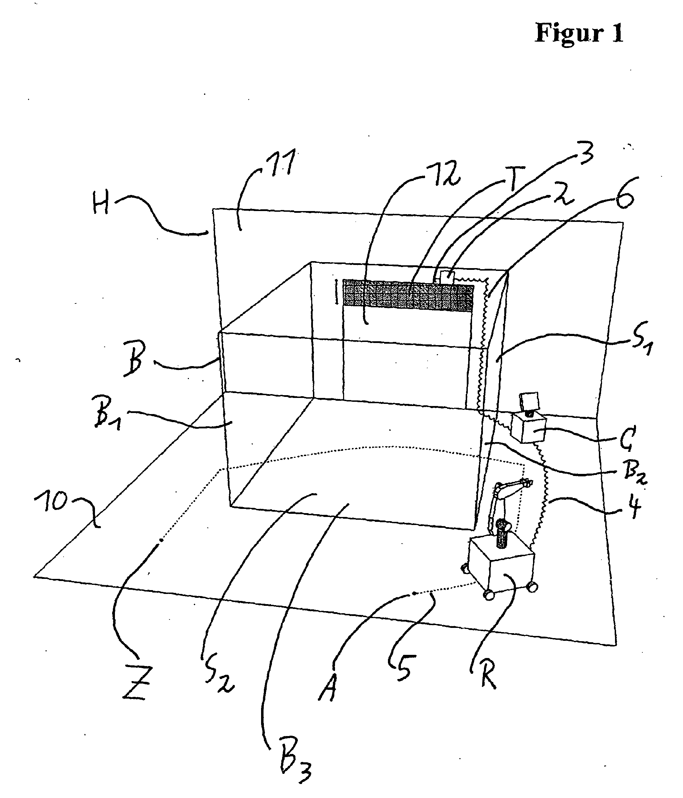

Die Figuren 1 bis 5 stellen schematische Darstellungen von realen Objekten bzw. Raumbereichen dar. Den realen Objekten Roboter R, Werkzeug W und Gegenständen G sowie Raumbereich B und den Raumpunkten (wie Start, Anfangs- und Zielpunkte) sind jeweils virtuelle Modelle zugeordnet. Komplexe reale Objekte, insbesondere der Roboter R werden dabei durch ein virtuelles Modell mit mehreren Einzelelementen repräsentiert, wobei die Anordnung und Ausrichtung der Dreh- oder verfahrbaren Verbindungen zwischen den Einzelelementen ebenfalls im virtuellen Modell hinterlegt ist. Die virtuellen Modelle der sich bewegenden realen Objekte werden in Echtzeit mittels entsprechender an den realen Objekten angebrachten Bewegungssensoren aktualisiert, so dass die virtuellen Modelle stets (im Rahmen der vorgegebenen Taktrate der Aktualisierung) ein aktuelles Abbild der realen Objekte und ihrer räumlichen Konfiguration zueinander wiedergeben. Die nachfolgend beschriebenen Ausführungsbeispiele sind durch Zuordnung entsprechender geometrischer Trigger zu den jeweiligen virtuellen Modellen realisiert, wobei sämtliche geometrische Trigger in den nachfolgenden Ausführungsbeispielen in Echtzeit überprüft werden, d.h. mit der gleichen Taktrate, mit der auch die Aktualisierung der virtuellen Modelle erfolgt.

Figur 1 zeigt in perspektivischer Ansicht einen Ausschnitt einer typischen Werkshalle H, mit einem Boden 10 und einer Wand 11. Ein als Roboter R ausgebildetes selbstfahrendes Handhabungsgerät bewegt sich innerhalb der Halle H auf dem Boden 10 entlang eines Pfades 5 von einem Anfangspunkt A zu einem Zielpunkt Z. Der Roboter R ist dabei mit einem Computer C zur Steuerung von Roboter und ggf. weiteren Objekten über eine Verbindung 4, beispielsweise ein Kabel oder eine drahtlose Funkverbindung, verbunden.

An der Wand 11 befindet sich eine rechteckige Öffnung 12, die mit einem Tor T verschließbar ist. Zum Öffnen und Schließen der Öffnung 12 mittels des Tores T ist ein Motor 2 mit Getriebe 3 angeordnet. Weiter ist der Motor 2 mit dem Getriebe 3 über eine Verbindung 6, insbesondere eine Funkverbindung, mit dem Computer C zur Steuerung verbunden.

Senkrecht zur Wand 11 in die Halle H ragt ein quaderförmiger räumlicher Bereich B hinein, dessen eine Seitenfläche S₁ mit einem Teilbereich der Wand 11 überlappt und parallel zu dieser ist, wobei die Seitenfläche S₁ größer ist als die Querschnittsfläche der Öffnung 12. Die Seitenfläche S₂, welche parallel zum Boden 10 der Halle H orientiert ist, entspricht im Wesentlichen einem Teilbereich des Bodens 10. Die Seitenflächen B₁ und B₂ des räumlichen Bereichs B, welche senkrecht zum Boden 10 der Halle H und senkrecht zur Wand 11 orientiert sind sowie die Stirnfläche B₃, welche senkrecht zum Boden 10 und parallel zur Wand 11 der Halle H orientiert ist, dienen in der virtuellen Repräsentation als Grenzfläche für das Auslösen von Aktionen.

Der Roboter R gemäß Figur 1 bewegt sich aufgrund eines vorgegebenen prozeduralen Steuerprogramms von seinem Anfangspunkt A zu seinem Zielpunkt Z auf dem Pfad 5, und durchquert von rechts kommend (die Orientierungen beziehen sich auf die Ansicht gemäß Figur 1) zunächst die Seitenfläche B₂ des räumlichen Bereichs B von rechts nach links und anschließend weiter die Seitenfläche B₁ von rechts nach links bis der Roboter R den Zielpunkt Z erreicht hat. Zusätzlich ist ein erster geometrischer Trigger definiert, welcher als Entscheidungsgröße den Abstand zwischen Roboter und Seitenfläche B₂ (jeweils in der virtuellen Repräsentation aufweist). Als Entscheidungskriterium ist der Abstand 0 vorgegeben.

Wenn sich der Roboter R nun von rechts nach links durch die Seitenfläche B₂ hindurch bewegt, so wird der Durchtritt durch die Seitenfläche B₂ dem Computer C über die Verbindung 4 mitgeteilt bzw. der Computer C hat die laufende Position des Roboters R mit dem in ihm hinterlegten virtuellen Modell von Roboter R und Umgebung bzw. Halle H verglichen und eine Durchfahrt des Roboters R durch die Seitenfläche B₂ mittels des hierfür definierten ersten geometrischen Triggers detektiert bzw. berechnet. Der erste geometrische Trigger umfasst wie beschrieben als Entscheidungsgröße den Abstand des virtuellen Modells des Roboters R zu dem virtuellen Modell der Seitenfläche B₂. Auslösekriterium ist ein Abstand 0, d.h. ein Einfahren des Roboters R in oder ein Ausfahren des Roboters R aus dem Bereich B durch die Seitenfläche B₂.

In Figur 1 nun ist der Seitenfläche B₂ mittels eines geometrischen Triggers eine richtungsabhängige Aktion zugeordnet, nämlich, dass das Tor T geschlossen werden soll, falls der Roboter R von rechts nach links durch die Seitenfläche B₂ hindurchtritt und das Tor T zum Zeitpunkt des Durchtritts geöffnet ist. Gleichzeitig wird das Öffnen des Tores T beispielsweise manuell durch einen Bediener verhindert. Tritt der Roboter von links nach rechts durch die Seitenfläche B₂ hindurch, so soll das Tor T wieder geöffnet werden, falls das Tor T zu diesem Zeitpunkt geschlossen war. Detektiert der Computer C im virtuellen Modell den Durchtritt des Roboters R von rechts nach links durch die Seitenfläche B₂, so steuert der Computer C anhand der Verbindung 6 den Motor 2 mit Getriebe 3 derart, dass das Tor T abgesenkt wird, das heißt die Öffnung 12 verschlossen wird.

Bewegt sich der Roboter nun auf seinem Pfad 5 zu seinem Zielpunkt Z, so tritt dieser im weiteren Verlauf von rechts nach links durch die Seitenfläche B₁ des räumlichen Bereichs B. Auch dieser Seitenfläche B₁ ist (in der virtuellen Repräsentation) ein entsprechender zweiter geometrischer Trigger mit einer entsprechende Aktion wie der Seitenfläche B₂ zugeordnet: Tritt der Roboter von links nach rechts durch die Seitenfläche B₁, so soll das Tor T geschlossen werden, falls dies geöffnet war. Bei einem Durchtritt von rechts nach links soll das Tor T dementsprechend wieder geöffnet werden, falls dies geschlossen war. Während der Bewegung des Roboters R wird laufend die aktuelle Position des Roboters R mit dem virtuellen Modell von Roboter R, räumlichen Bereichen B und Umgebung bzw. Halle H, etc. verglichen. Der Computer C überprüft die beiden geometrischen Trigger laufend, d.h. ob ein Durchtritt des Roboters R und ggf. auch weiteren Objekten durch die Seitenflächen B₁, B₂, etc. erfolgt ist, und gegebenenfalls in welcher Richtung/Orientierung dieser Durchtritts erfolgt ist. Erfolgt der Durchtritt wie hier gezeigt beim Verfahren des Roboters R von seinem Anfangspunkt A zu seinem Zielpunkt Z durch den Bereich B₁ von rechts nach links, so steuert der Computer C über die Verbindung 6 den Motor 2 mit Getriebe 3 derart, dass das Tor T, welches vorher geöffnet war wegen des Durchtritts von rechts nach links durch die Seitenfläche B₁ nun geschlossen wird.

Dieses Beispiel zeigt, wie durch Kombination einer prozeduralen Steuerung mit der Definition virtueller Modelle und zugeordneter geometrischer Trigger in einfacher Weise zusätzliche Aufgaben erfüllt werden können, wie in diesem Beispiel das Schließen des Tores T, sobald sich der Roboter R im Raumbereich B befindet. Die Definition der geometrischen Trigger erfolgt hierbei anhand der virtuellen Modelle und unabhängig davon, ob bei der tatsächlichen Bewegung des Roboters ein Eindringen in den Raumbereich B erfolgt oder nicht. Wird nun beispielsweise die prozedurale Steuerung aufgrund einer geänderten Anforderung geändert und tritt der Roboter R bei der geänderten Bahn nicht in den Raumbereich ein, so werden auch die den geometrischen Triggern zugeordneten Aktionen nicht ausgeführt. Wesentlich ist jedoch, dass die geometrischen Trigger in einfacher Weise als Erfüllung einer Sicherheitsbestimmung hinsichtlich des Öffnens und Schließens des Tores definiert werden, ohne dass hierfür die tatsächliche Bahn der Bewegung des Roboters bekannt sein muss. Dies ist ein elementarer Vorteil der ereignisabhängigen Steuerung.

Transportiert beispielsweise der Roboter R gefährliche-Güter, so kann durch die Seitenflächen B₁, B₂ und B₃ ein so genannter Sicherheitsbereich B um das Tor T definiert werden, bei dem das Tor T geschlossen wird, wenn der Roboter R in dessen Nähe, d.h. in den um die Öffnung 12 definierten Sicherheitsbereich eintritt. Hinter der Öffnung 12 befindliche Gegenstände (nicht gezeigt) werden so geschützt, wenn der Roboter R in den Bereich der Öffnung 12 gelangt. Tritt er wieder aus diesem Sicherheitsbereich B aus, so wird das Tor T wieder geöffnet, beispielsweise um wieder Gegenstände durch die Öffnung 12 transportieren zu können.

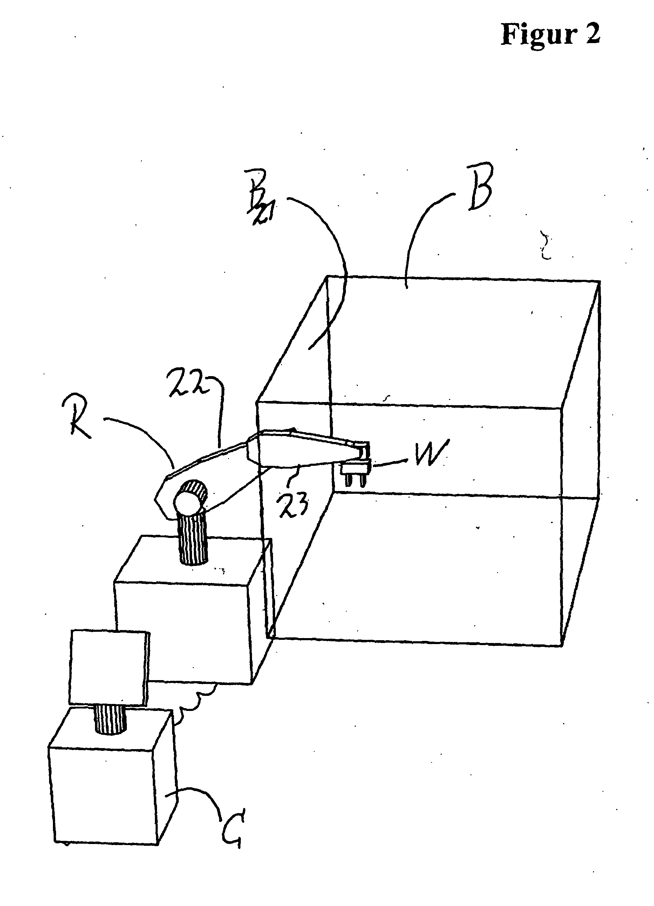

In Figur 2 ist ein quaderförmiger räumlicher Bereich B gezeigt, der als Arbeitsbereich eines als Roboter R ausgebildeten Handhabungsgerätes mit einem Werkzeug W dient. Der Roboter R greift über seine Gelenkarme 22, 23 teilweise in den Bereich B ein. Am Ende des Gelenkarmes 23 des Roboters R ist das Werkzeug W angeordnet. Der Roboter R ist mit einem Computer C zur Steuerung des Roboters R und damit auch des Werkzeugs W verbunden. Das Werkzeug W kann dabei beispielsweise eine Schweißzange umfassen. Der räumliche Bereich B dient nun als Arbeitsbereich des Roboters R: Befindet sich also das Werkzeug W des Roboters R in dem Bereich B, so ist das Werkzeug W, hier die Schweißzange aktiviert, um ein Werkstück (nicht gezeigt) bearbeiten zu können. Bewegt sich das Werkzeug W durch eine Seitenfläche B₂₁ des Bereichs B heraus, beispielsweise zur Wartung, etc., so wird das Werkzeug W in Form der Schweißzange aus Sicherheitsgründen abgeschaltet. Wird die Schweißzange W durch den Roboter R anschließend wieder in den Bereich B bewegt, so wird die Schweißzange wieder aktiviert und der Roboter R kann die Bearbeitung des Werkstücks fortsetzen. Dies wird dadurch realisiert, dass dem virtuellen Modell des Werkzeuges W und dem virtuellen Modell der Seitenfläche B₂₁ ein geometrischer Trigger zugeordnet ist, mit dem Abstand des Werkzeuges W von der Seitenfläche B₂₁ (im virtuellen Modell) als Entscheidungsgröße und mit Abstand 0 als Auslösekriterium. Dem geometrischen Trigger ist als Aktion zugeordnet, dass abhängig von der Bewegungsrichtung des Werkzeuges W relativ zu der Seitenfläche B₂₁ (im virtuellen Modell) die Schweißzange ab- oder angeschaltet wird. Weitere entsprechende geometrische Trigger sind den restlichen Seitenflächen des quaderförmigen Bereiches B zugeordnet.

Auch in diesem Beispiel kann somit in einfacher Weise durch Definition von insgesamt sechs Triggern ein quaderförmiger räumlicher Bereich festgelelgt werden, wobei ausschließlich in diesem Bereich eine Benutzung des Werkzeuges möglich ist. Auch für diese Definition ist die Kenntnis der tatsächlich durch den Roboter ausgeführten Bewegung nicht notwendig.

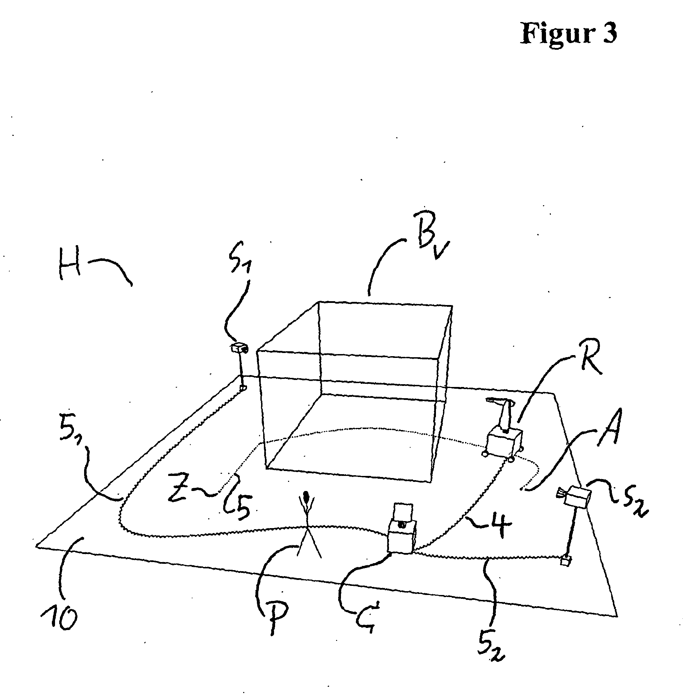

Figur 3 zeigt nun eine erfindungsgemäße Vorrichtung bzw. ein erfindungsgemäßes Verfahren, bei dem verschiedene Aktionen mit unterschiedlicher Priorität einem räumlichen quaderförmigen Bereich Bᵥ mittels geometrischer Trigger zugeordnet sind. In Figur 3 ist wieder ein Boden 10 einer Halle H gezeigt, auf dem sich ein Roboter R für die Erledigung von Aufgaben zwischen einem Anfangspunkt A und einem Zielpunkt Z auf einem Pfad 5 entlang bewegt. Ausgehend von seinem Anfangspunkt A bewegt sich der Roboter R dabei zunächst mit einer Geschwindigkeit v₁. In der Halle H sind Sensoren S₁, S₂ angeordnet, hier in Form von optischen Kameras. Selbstverständlich können im Rahmen der Erfindung auch Infrarot-, Ultraviolett- oder sonstige Sensoren verwendet werden. Die Sensoren S₁ und S₂ sind über Verbindungen 5₁ und 5₂ mit einem Computer C verbunden, welcher ebenfalls über eine Verbindung 4, insbesondere eine Funkverbindung mit dem Roboter R zur Steuerung des Roboters R verbunden ist. Weiter befindet sich eine Person P in der Halle H in der Nähe des räumlichen Bereichs Bᵥ.

Dem räumlichen Bereich Bᵥ ist mittels geometrischer Trigger analog zu den vorhergehend aufgeführten Beispielen eine Aktion zugeordnet, wobei in diesem Ausführungsbeispiel der Aktion zusätzlich einer Priorität P₁ zugeordnet ist: Es wird eine Geschwindigkeit v₂ < v₁ des Roboters R eingehalten, wenn sich der Roboter R in dem räumlichen Bereich Bᵥ bewegt bzw. befindet. Weiterhin ist der räumliche Bereich Bᵥ ein so genannter Sicherheitsbereich, das heißt, dem räumlichen Bereich Bᵥ ist eine zweite Aktion mit einer Priorität P₂ zugeordnet: Der Roboter R wird angehalten, wenn er sich in diesem räumlichen Bereich befindet und sich gleichzeitig noch eine Person P in dem räumlichen Bereich Bᵥ befindet bzw. in den räumlichen Bereich Bᵥ eintritt.

Dies wird dadurch erreicht, dass die Priorität P₁ kleiner ist als die Priorität P₂, welche der zweiten Aktion für die Person P zugeordnet ist (P₁ < P₂). Wird nun der Roboter R auf seinem Pfad 5 von dem Anfangspunkt A zu seinem Zielpunkt Z teilweise durch den Bereich Bᵥ durch den Computer C zur Steuerung verfahren, bewegt sich der Roboter außerhalb des Bereichs Bᵥ mit der Geschwindigkeit v₁ und innerhalb des Bereichs Bᵥ dann mit der Geschwindigkeit v₂.

Der Computer C überwacht mittels der Sensoren S₁, S₂ laufend, ob und ggf. in welcher Richtung ein weiteres Objekt, beispielsweise die Person P, in den räumlichen Bereich eintritt bzw. sich in diesem befindet. Tritt nun, während sich der Roboter R in dem Bereich Bᵥ befindet, eine Person P den Bereich Bᵥ ein, so wird der Roboter R angehalten, da die Priorität P₂ der zweiten Aktion bezüglich der Person P größer ist als die Priorität P₁ der Aktion der Aufrechterhaltung der Geschwindigkeit v₂ des Roboters R. Wenn die Person P wieder den Sicherheitsbereich Bᵥ verläßt, so wird dies wieder von dem Computer C anhand der Sensoren S₁, S₂ festgestellt und es wird wieder die Aktion mit der höchsten Priorität durch den Computer C zur Steuerung des Roboters R ausgeführt, also die Aufrechterhaltung einer Geschwindigkeit v₂ im Bereich Bᵥ, das heißt, der Roboter wird wieder mit der Geschwindigkeit v₂ verfahren, solange er sich im Bereich Bᵥ befindet. Verlässt der Roboter R nun im weiteren Verlauf seines Pfades 5 den Bereich Bᵥ, wird dieser wieder mit der ursprüngliche Geschwindigkeit v₁ verfahren.

Die genannte erste Aktion der Geschwindigkeitsbeschränkung im Bereichs Bᵥ wird dabei parallel zum laufenden Roboterprogramm durch den Computer C ausgeführt, so dass das ursprüngliche Bewegen des Roboters R vom Anfangspunkt A bis zum Zielpunkt Z nicht geändert wird. Beim Verlassen des Bereichs Bᵥ wird diese Geschwindigkeitsbeschränkung wieder aufgehoben, das heißt, nur diese Aktion wird gelöscht bzw. durch den Computer C zurückgenommen. Sicherheitsrelevante Aktionen, die z. B. beim Betreten eines Sicherheitsbereichs durch eine Person P ausgeführt werden sollen, werden mit einer höheren Priorität versehen, so dass diese vorrangig durch den Computer C ausgeführt werden. Wird der Sicherheitsbereich Bᵥ dann wieder durch die Person P verlassen, wird die ursprüngliche Bewegung bzw. der Arbeitsablauf des Roboters R wieder aufgenommen.

Es ist ebenso möglich, die Geschwindigkeit v des Roboters R im räumliche Bereich Bᵥ indirekt zu ändern, indem bei Aufenthalt des Roboters R im räumlichen Bereich Bᵥ regelmäßig die Aktion des Fahrens mit der Geschwindigkeit v₂ aufgerufen wird. Dadurch wird die Geschwindigkeit des Roboters R entsprechend angepasst. Die ursprüngliche Programmierung bleibt dann unverändert; in dieser ist weiterhin die Geschwindigkeit v₁ des Roboters R vorgesehen. Eine Umprogrammierung des Steuerprogramms durch den Computer C zur Steuerung des Roboters R ist damit nicht notwendig.

In diesem Beispiel wird deutlich, dass auch mehrere Aktionen von mehreren geometrischen Triggern gleichzeitig ausgeführt werden können, in diesem Fall ist dies die gleichzeitige Vorgabe zweier Geschwindigkeiten v₁, und v₂. Zur Vermeidung von widersprüchlichen Steuerbefehlen der einzelnen Aktionen wird bei Ausführung der Aktionen anhand der vergebenen Prioritäten der tatsächlich auszuführende Steuerbefehl ermittelt, so dass eine Auflösung des potentiellen Widerspruches erfolgt, ohne dass ein Eingreifen eines Benutzers notwendig ist.

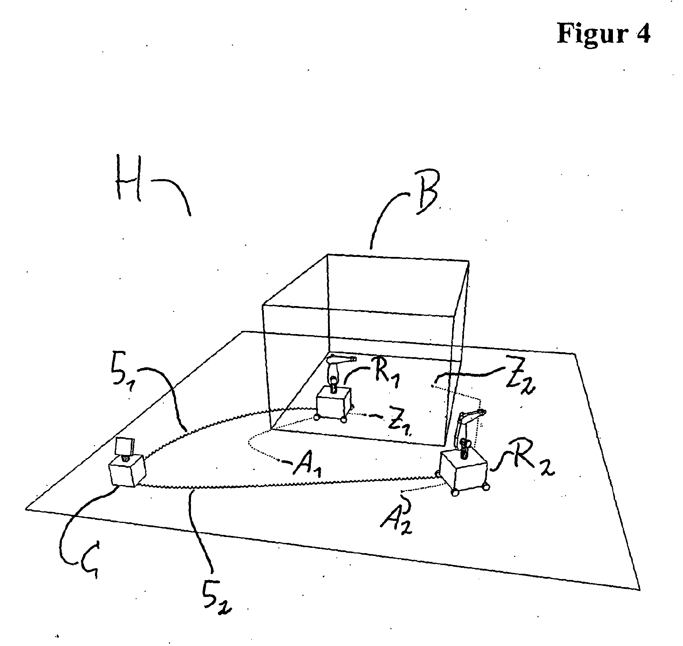

In Figur 4 ist ein weiteres Ausführungsbeispiel für ein erfindungsgemäßes Verfahren/Vorrichtung zur Steuerung eines Roboters gezeigt. Ein als Roboter R₁ ausgebildetes Handhabungsgerät ist in einer Halle H von einem Anfangspunkt A₁ zu einem Zielpunkt Z₁ verfahrbar. Der Roboter R₁ ist mit einem Computer C zur Steuerung über eine Verbindung 5₁, insbesondere eine Funkverbindung, verbunden. Des Weiteren ist ein Roboter R₂ in der Halle H zwischen einem Anfangspunkt A₂ und einem Zielpunkt Z₂ verfahrbar. Der Roboter R₂ ist dabei über eine Verbindung 5₂ mit einem Computer C zur Steuerung verbunden. Die beiden Anfangspunkte A₁ und A₂ sind dabei außerhalb eines räumlichen Bereiches B angeordnet. Die Zielpunkte Z₁ und Z₂ liegen innerhalb des räumlichen Bereiches B.

Dem Roboter R₁ ist ein erstes und dem Roboter R₂ ein zweites und dem räumlichen Bereich B ein drittes virtuelles Modell zugeordnet.

Weiter ist dem räumlichen Bereich B im virtuellen Modell mittels geometrischer Trigger eine Eigenschaft zugeordnet, und zwar, dass sich jeweils nur ein Roboter innerhalb des räumlichen Bereiches B zur gleichen Zeit aus Sicherheitsgründen aufhalten darf. Steuert der Computer C nun die Roboter R₁ und R₂ von ihren Anfangspunkten A₁ und A₂ gleichzeitig zu ihren Zielpunkten Z₁ und Z₂, so tritt einer der beiden Roboter R₁, R₂, in Figur 4 der Roboter R₁, zuerst in den räumlichen Bereich B ein. Da sich aber bereits der Roboter R₁ im räumlichen Bereich B befindet, wird der Roboter R₂ nun im weiteren Verlauf vom Computer derart gesteuert, dass dieser beim Eintritt in den räumlichen Bereich B gestoppt wird. Sobald der Roboter R₁ den Bereich wieder verlassen hat, steuert der Computer den Roboter R₂ nun derart, dass die ursprüngliche Programmierung wieder aufgenommen wird, d.h. dieser an seinen Zielpunkt Z₂ im räumlichen Bereich B verfahren wird. Damit ist sichergestellt, dass sich jeweils nur ein Roboter R₁, R₂ im räumlichen Bereich B zur gleichen Zeit aufhält. Der Computer C gleicht somit die jeweiligen virtuellen Modelle der beiden Roboter R₁, R₂ in Echtzeit jeweils miteinander und mit dem virtuellen Modell des Bereichs und der Umgebung bzw. der Halle H ab bzw. synchronisiert diese zueinander. In einem weiteren Ausführungsbeispiel wird der Roboter R₁ bei Eintritt in den räumlichen Bereich zunächst gestoppt und nach Ablauf einer vorgegebenen Mindestdauer (d.h. eines "Abwartens") wird dem Roboter R₂ eine weitere Aufgabe außerhalb des Bereiches B mittels einer entsprechenden Aktion zugeordnet. Nach Abschließen dieser zweiten Aufgabe fährt der Roboter an seine ursprüngliche Position zurück, so dass dann die ursprüngliche Aufgabe erledigt wird, sofern sich kein weiterer Roboter im Bereich B befindet.

Die beschriebene Funktionalität wird beispielsweise dadurch erreicht, dass geometrische Trigger wie folgt definiert sind:

Zunächst ist eine globale Variable Zustandsvariable definiert, welche zu jedem der Roboter R₁, R₂ jeweils die Information enthält, ob der jeweilige Roboter sich in dem Bereich B befindet oder nicht. Zu jeder senkrecht zu dem Hallenboden stehenden Seitenfläche und für jeden Roboter sind weiterhin geometrische Trigger wie folgt definiert:
Beispielsweise ist zu der vorderen Seitenfläche des Bereiches B, ein geometrischer Trigger definiert, welcher den Abstand dieser Seitenfläche zu Roboter R₁ überwacht, d.h. als Entscheidungsgröße den Abstand des Roboters zur der Seitenfläche aufweist. Als Auslösebedingung ist ein Abstand 0 definiert und als Aktion ist abhängig von der Bewegungsrichtung des Roboters ein Verändern der globalen Zustandsvariable derart zugeordnet, dass bei Eintreten des Roboters in den Bereich B die globale Zustandsvariabel für Roboter R₁ auf den Wert 1 und bei Verlassen des Bereiches B durch den Roboter die Zustandsvariable auf den Wert 0 gesetzt wird. Weitere drei geometrische Trigger sind für die übrigen Flächen definiert und weitere vier geometrische Trigger sind entsprechend für Roboter R₂ definiert.

Darüber hinaus sind acht weitere geometrische Trigger wie folgt definiert: Beispielsweise ist zu der vorderen Seitenfläche des Bereiches B, ein geometrischer Trigger definiert, welcher den Abstand dieser Seitenfläche zu Roboter R, überwacht, d.h. als Entscheidungsgröße den Abstand des Roboters zu der Seitenfläche aufweist. Als Auslösebedingung ist ein Abstand 0 definiert und als Aktion ist abhängig von der Bewegungsrichtung des Roboters und abhängig von der globalen Zustandsvariable hinsichtlich des Roboters R₂ definiert, dass der Roboter R₁ abgestoppt wird, sofern sich der Roboter R₂ in dem Bereich B befindet. Entsprechend sind drei weitere geometrische Trigger für die übrigen Seitenwände bezüglich Roboter R₁ und vier weitere geometrische Trigger entsprechend für Roboter R₂ definiert.

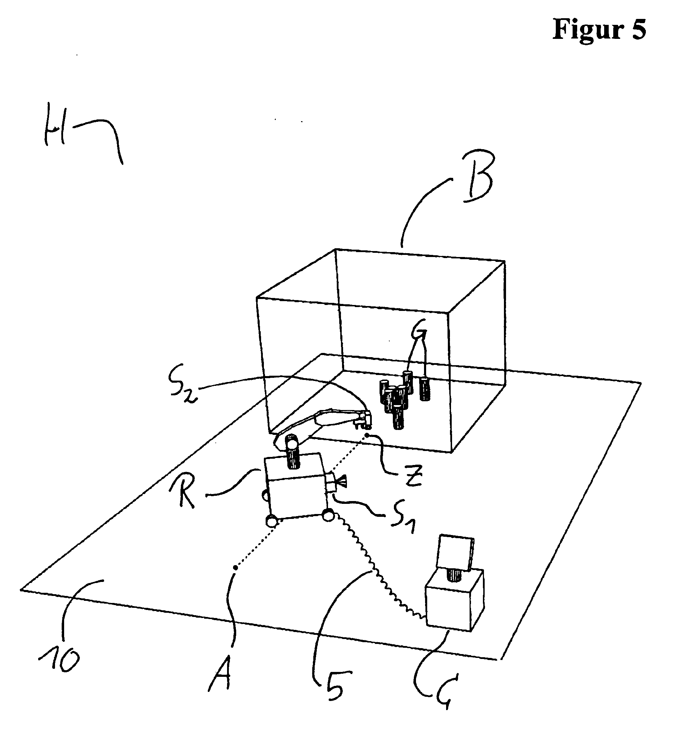

Figur 5 zeigt schließlich ein erfindungsgemäßes Verfahren bzw. Vorrichtung zur Steuerung von einem Roboter R anhand eines aufgabenhaft-formulierten Befehls. In einer Halle H ist ein Roboter R verfahrbar von einem Anfangspunkt A bis zu einem Zielpunkt Z. Der Roboter R umfasst Sensoren S, und S₂, welche Informationen über Ort und Lage von Gegenständen G, welche sich auf dem Boden 10 der Halle H befinden, an den Roboter R und weiter an einen Computer C zur Steuerung des Roboters R über eine Verbindung 5 übermitteln. Der Computer C erhält von den Sensoren S₁ und S₂ entsprechend die jeweiligen Positions-, Lage- und Abmessungs-Informationen der aufzunehmenden Gegenstände G und berechnet für den Roboter R eine Greifposition zur Aufnahme der jeweiligen Gegenstände G.

Wird dem Roboter R nun der aufgabenhaft-formulierte Befehl der Aufnahme von Gegenständen G₁, G₂, ... gestellt, übersetzt der Computer C dieser in entsprechende Steuerbefehle für den Roboter R, das heißt, der Computer C berechnet nun selbständig von dem Anfangspunkt A des Roboters R einen Weg zu einem Zielpunkt in einem räumlichen Bereich B, in dem sich Gegenstände G₁, G₂, ... befinden. Ist der Roboter R durch den Computer C dorthin verfahren worden, so ermittelt der Computer C über die Sensoren S₁, S₂ die entsprechenden Informationen für die Aufnahme der Gegenstände G₁, G₂, ... und steuert dann den Roboter R derart, dass dieser die Gegenstände G₁, G₂, ... nacheinander anfährt, aufnimmt und ggf. an einen anderen Ort transportiert.

Dem räumlichen Bereich B kann beispielsweise auch eine bestimmte Suchstrategie für die Gegenstände G₁, G₂, etc. zugeordnet sein, das heißt, der Computer C errechnet für den Roboter R anhand der Eigenschaft des räumlichen Bereiches B eine optimale Suchstrategie für die Gegenstände G₁, G₂ , ... in dem räumlichen Bereich B für deren Aufnahme.

Die beschriebene Funktionalität wird beispielsweise dadurch erreicht, dass folgende geometrische Trigger definiert sind:

Dem Roboter ist zunächst mittels prozeduraler Programmierung das Verfahren von Punkt A zu Punkt Z vorgegeben. Dem Bereich B sind über den Seitenflächen des Bereiches zugeordneter geometrischer Trigger analog zu den Triggern der vorangegangenen Ausführungsbeispiele folgende Aktionen zugeordnet, sofern der Roboter R in den Bereich B einfährt:
- Überprüfung ob Bereich frei, d.h. ob sich kein weiterer Roboter in dem Bereich befindet und Abstoppen des Roboters R₁ für eine vorgegebene Zeitspanne, danach erneute Überprüfung, ob der Bereich B frei ist und Fortfahren mit der durch die prozedurale Programmierung vorgegebenen Bewegung. Hier werden somit Steuervorgaben aufgrund der prozeduralen Programmierung gegebenenfalls für eine vorgegebene Zeitspanne ausgesetzt. Es erfolgt jedoch kein endgültiges Beenden der durch die prozedurale Programmierung vorgegebenen Steuerung, denn nachdem der Bereich B wieder frei ist, wird die Steuerung, wie vorgegeben, wieder ausgeführt.
- Reduzierung der Geschwindigkeit des Roboters R bei Einfahren in den Bereich B.
- Einschalten der Sensoren S₁ und S₂ und Ausführen eines räumlichen Erkennungsablaufes, zum Ermitteln der Position eines Gegenstandes G in dem räumlichen Bereich B, sowie Ergreifen des aufgefundenen Gegenstandes und Transport an eine vorgegebene Position außerhalb des Bereiches B.

Die Ausführungsbeispiele der Figuren 1 bis 5 können im Rahmen der Erfindung auch beliebig miteinander kombiniert werden, das heißt, es können auch mehrere Roboter R Gegenstände G₁, G₂ aufnehmen, wobei z. B. immer nur zwei Roboter R sich in dem Bereich B für die Aufnahme der Gegenstände befinden dürfen. Es kann ebenfalls auch der räumliche Bereich B zusätzlich mit der Eigenschaft versehen sein, dass sich die Roboter R bei Aufenthalt in dem räumlichen Bereich B nur mit einer bestimmten Geschwindigkeit bewegen dürfen.

In einem weiteren Ausführungsbeispiel analog zur Figur 2 kann die Steuerung des Roboters R auch durch einen Bediener an der Steuerung bzw. dem Computer C direkt erfolgen, das heißt, der Bediener verfährt den Roboter R manuell. Wird dabei versehentlich ein bestimmter räumlicher Bereich B, der als Sicherheitsbereich für den Bediener definiert ist, verlassen, wird ein an einem Greifarm 3 angebrachtes Werkzeug W, beispielsweise in Form eines (für einen Bediener gefährlichen) Laserschweißgeräts aus Sicherheitsgründen abgeschaltet.

Eine weitere Ausgestaltung des erfindungsgemäßen Verfahrens analog zur Figur 2 besteht darin, dass der Roboter R an seinem Greifarm 23 ein Werkzeug W in Form einer Bohrmaschine umfasst. Weiter ist in dem virtuellen Bereich B eine Werkbank angeordnet (nicht gezeigt in Figur 2) auf der sich ein zu bearbeitendes Werkstück befindet. Dem räumlichen Bereich B ist nun die Eigenschaft zugeordnet, dass die Bohrmaschine immer in senkrechter Richtung ausgerichtet sein muss, wenn sich das Werkzeug W in dem räumlichen Bereich B befindet. Führt nun ein Bediener manuell den Roboter R mittels des Computers C über die Werkbank, so steuert der Computer C automatisch den Roboter in dem Bereich B derart, dass die Bohrmaschine immer in senkrechter Richtung zu einem Boden einer Halle ausgerichtet ist. Der Bediener kann dann manuell über den Computer C das Einschalten der Bohrmaschine sowie das Verfahren des Roboterarms für ein vertikales Bohren steuern. Dabei kann der Roboter R auch mittels Kraftregelung geführt werden, das heißt, der Bediener kann den Roboter am Werkzeug mittelbar ergreifen und führen. Auf diese Weise wird das manuelle Bohren durch die senkrechte Ausrichtung der Bohrmaschine im räumlichen Bereich B für einen Bediener erheblich vereinfacht.

Weiterhin können dem zu bearbeitenden Werkstück auch sämtliche Informationen und Parameter als Eigenschaft zugeordnet werden, die benötigt werden, um das Werkstück zu bearbeiten. Wird das Werkstück gemäß dem oben genannten Ausführungsbeispiel durch eine Bohrmaschine bearbeitet, sind dem virtuellen Modell des Werkstücks die jeweiligen Positionen von Bohrlöchern, die jeweiligen Tiefen der Bohrlöcher, sowie die jeweiligen Durchmesser und Orientierungen, etc. von Bohrlöchern zugeordnet. Erhält dann der Roboter R über die Steuerung C den aufgabenhaft-formulierten Befehl zur Bearbeitung des Werkstücks, so wird der Roboter R zunächst selbständig nach dem entsprechenden Werkzeug suchen, sich zu dem Werkstück bewegen und eine passende Position zur Bearbeitung des Werkstücks einnehmen, und dieses Werkstück gemäß den entsprechenden Eigenschaften, welche dem Werkstück zugeordnet sind, bearbeiten. Dabei können auch mehrere Roboter R gleichzeitig ein Werkstück W arbeiten. Das virtuelle Modell des Werkstücks wird dabei derart angepasst, dass bereits abgearbeitete Vorgänge, im obigen Ausführungsbeispiel das entsprechende Bohren von Bohrlöchern, als bereits durchgeführt im virtuellen Modell gekennzeichnet werden. Die Steuerung bzw. der Computer C steuert dann die Roboter R derart, dass kein Bearbeitungsschritt mehrfach ausgeführt wird. Gleichzeitig steuert der Computer C die Roboter R derart, dass mehrere Roboter R parallel das Werkstück bearbeiten können, ohne sich zu behindern oder sich oder das Werkstück zu beschädigen.

In einer weiteren Ausgestaltung des erfindungsgemäßen Verfahrens gemäß Figur 2 können auch mehrere Roboter R an einer Fertigungsstraße für ein Werkstück eingesetzt werden. Das Werkstück wird am Anfang der Fertigungsstraße in diese eingeleitet und durchläuft dann mehrere Bearbeitungsstationen, an denen jeweils Roboter das Werkstück in einer bestimmten Weise bearbeiten: Ein erster Roboter R an einer bestimmten Bearbeitungsstation an der Fertigungsstraße bearbeitet für eine bestimmte Zeit dieses Werkstück. Der Computer C steuert dabei den ersten Roboter R derart, dass möglichst viele Bearbeitungsschritte innerhalb dieser vorgegebenen Zeit durch den Roboter R ausgeführt werden. Der im weiteren Verlauf der Fertigungsstraße angeordnete, benachbarte Roboter R führt dann die dem Werkstück zugeordneten weiteren und vom ersten Roboter R noch nicht vorgenommenen Bearbeitungsschritte innerhalb einer weiteren Zeitspanne durch. Eine derartige Steuerung von Robotern ist äußerst flexibel, da eine Verteilung von verschiedenen Bearbeitungsschritten bzw. -aktionen auf verschiedene Roboter R je nach zur Verfügung gestellter Zeit erfolgt. Dadurch kann beispielsweise auch der Ausfall eines Roboters R entlang der Fertigungsstraße kompensiert werden, da die anderen Roboter R dann durch den Computer C, ggf. nach Anpassung der jeweiligen Zeitspannen für die Bearbeitung an den einzelnen Bearbeitungsstationen, entsprechend Aufgaben des ausgefallenen Roboters ohne weiteres übernehmen. Der ausgefallene Roboter kann dann im laufenden Betrieb repariert oder ersetzt werden und dann zu einem bestimmten Zeitpunkt wieder in den Arbeitsablauf bzw. die Fertigungsstraße integriert werden, ohne dass dafür die gesamte Fertigungsstraße gestoppt und eine neue Programmierung vorgenommen werden muss.

Anhand des virtuellen Modells des Industrieroboters, dem weiteren Objekt und der Umgebung ist neben der automatischen Berechnung der Bahn des Roboters von einem Anfangspunkt A zu einem Zielpunkt Z auch eine Vorausberechnung von verschiedenen möglichen Bahnen möglich, wenn das virtuelle Modell von Roboter, weiterem Objekt und Umgebung durch den Computer C wesentlich schneller berechnet und angepasst werden kann als dies in Realität abläuft (Überechtzeit-Berechnung). Sind beispielsweise zwei Roboter mit der Bearbeitung eines Werkstücks betraut, so kann bereits während des Hinbewegens zu dem Werkstück neben dem optimalen Weg und der Positionierung relativ zu dem Werkstück für die jeweiligen Roboter auch bereits die Schritte für die Bearbeitung des Werkstücks durch den Computer C im Voraus berechnet werden, um so die Bearbeitung des Werkstücks durch die beiden Roboter beispielsweise in zeitlicher Hinsicht zu optimieren. Es werden bei dieser so genannten Überechtzeit-Berechnung verschiedene Abfolgen von Bearbeitungsschritten im Voraus berechnet, ähnlich der Vorausberechnung von verschiedenen Stellungen bei einem Schachcomputer und gegebenenfalls die Bearbeitungsschritte umgestellt, verändert oder angepasst, so dass für die Bearbeitung des Werkstücks beispielsweise eine minimale Zeitdauer erreicht wird.

Zusätzlich kann auch der Bearbeitungsprozess des Werkstücks durch die beiden Roboter R nach mehreren durchgeführten Bearbeitungsszenarien durch den Computer C selbständig angepasst und optimiert werden, so dass die Bearbeitung des Werkstücks im Laufe der Zeit weiter optimiert und verbessert wird entsprechend jeweiligen Optimierungsvorgaben.

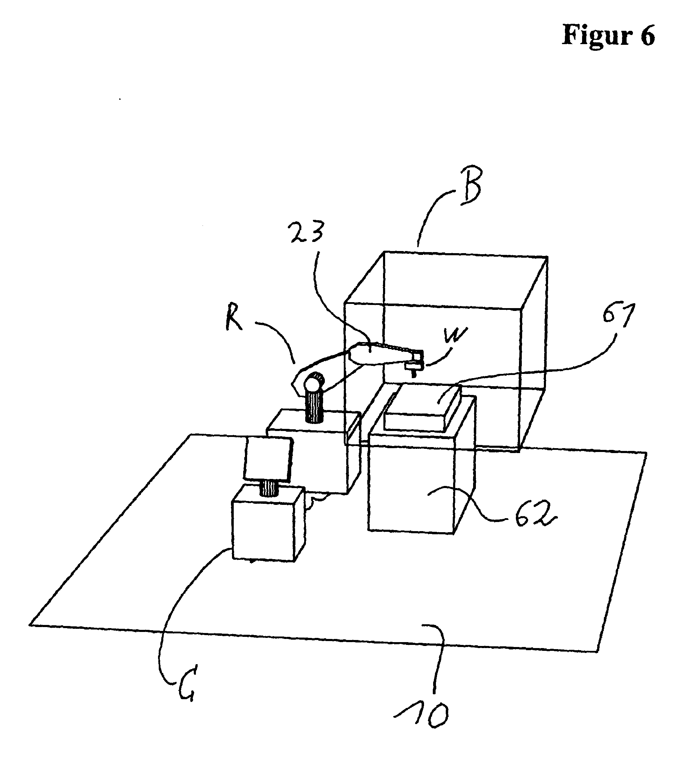

In Figur 6 ist in einem weiteren Ausführungsbeispiel ein quaderförmiger räumlicher Bereich B gezeigt, der als Arbeitsbereich eines als Roboter R ausgebildeten Handhabungsgerätes mit einem Werkzeug W dient. Das Werkzeug W in Form einer Bohrmaschine ist am Ende eines Gelenkarmes 23 des Roboters R angeordnet. Der Roboter R ist mit einem Computer C zur Steuerung des Roboters R und damit auch mit Werkzeug W zu dessen Steuerung verbunden.

In den Raumbereich B hineinreichend ist eine Werkbank 62 angeordnet, auf der sich ein zu bearbeitendes Werkstück 61 befindet. Führt nun ein Benutzer manuell den Roboter R mittels des Computers C derart, dass sich das Werkzeug W in den Raumbereich B hineinbewegt, so steuert der Computer C den Roboter R derart, dass das Werkzeug W während der weiteren Bewegung senkrecht zu einem Boden 10 ausgerichtet ist, sofern sich das Werkzeug W innerhalb des Raumbereiches B befindet. Sobald sich das Werkzeug W dem Werkstück 61 auf einen vorgegebenen Abstand nähert, wird das Werkzeug W angeschaltet, jedoch nur, sofern das Werkzeug W bereits vollständig senkrecht zu dem Boden 10 ausgerichtet ist. Sobald sich das Werkzeug W wieder weiter als der vorgegebene Abstand von dem Werkstück 61 entfernt, wird das Werkzeug W wieder abgeschaltet. Das Werkzeug W kann nur dann in eine andere Orientierung als senkrecht zu dem Boden 10 gebracht werden, wenn es den Arbeitsbereich B verlässt.

Das zuvor genannte Ausführungsbeispiel wird dadurch realisiert, dass dem virtuellen Modell des Werkzeugs W und des Raumbereiches B ein erster geometrischer Trigger zugeordnet ist, mit dem Abstand des Werkzeuges W von dem Raumbereich B (im virtuellen Modell) als Entscheidungsgröße und mit Abstand 0 als Auslösekriterium. Dem ersten geometrischen Trigger ist Aktion zugeordnet, dass bei einer Bewegung des Werkzeuges W in den Raumbereich B hinein, die automatische Senkrechtsstellung des Werkzeuges W erfolgt. Entsprechend wird bei Verlassen des Raumbereiches B die Senkrechtstellung des Werkzeuges W nicht mehr zwingend vorgeschrieben.

Weiterhin wird ein zweiter geometrischer Trigger definiert, der zwei Entscheidungsgrößen mit jeweils einer Einzelauslösebedingung besitzt. Die erste Entscheidungsgröße ist der Winkel zwischen dem Werkzeug W und dem Boden 10, die Einzelauslösebedingung hierzu ist ein Winkel von 90°. Die zweite Entscheidungsgröße ist der Abstand des Werkzeuges W von dem Werkstück 61, die dazugehörige Einzelauslösebedingung ist "kleiner als Abstand A0", wobei A0 ein vorgegebener Abstand in einer definierten Längeneinheit ist, beispielsweise in Metern. Die beiden Einzelauslösebedingungen sind in einer Auslösebedingung des geometrischen Triggers mit einem logischen Operator UND verknüpft. Die Auslösebedingung des geometrischen Triggers ist somit nur dann erfüllt, wenn sowohl die erste Einzelauslösebedingung als auch die zweite Einzelauslösebedingung erfüllt ist.

Den zweiten geometrischen Trigger ist als Aktion das Einschalten des Werkzeuges W zugeordnet. Durch diese Definition des geometrischen Triggers wird das Werkzeug W somit nur dann eingeschaltet, wenn sich das Werkzeug W innerhalb des Raumbereiches B befindet und senkrecht zu dem Boden 10 steht und der Abstand zu dem Werkstück 61 geringer als der vorgegebene Abstand A0 ist.

Die Aktion schaltet das Werkzeug W wieder aus, sobald eine der Einzelauslösebindungen nicht mehr erfüllt ist. Hierbei kann der Roboter R auch mittels einer Kraftregelung geführt werden, d. h. der Bediener kann in diesem Fall den Roboter R am Werkzeug W mittelbar ergreifen und führen. Auf diese Weise wird das manuelle Bohren durch die senkrechte Ausrichtung der Bohrmaschine im räumlichen Bereich B für den Bediener erheblich vereinfacht.

In diesem Ausführungsbeispiel wird deutlich, dass ein Trigger von mehreren durch logische Operatoren verknüpfte Einzelauslösebedingungen abhängig definiert werden kann und dass auch bei einem manuellen Verfahren des Roboters geometrische Trigger vorteilhaft eingesetzt werden können.

Die vorangegangenen Ausführungsbeispiele und vorzugsweisen Ausführungsformen wurden zum Teil anhand von selbstfahrenden Handhabungsgeräten erläutert. Insbesondere ist es jedoch vorteilhaft, das erfindungsgemäße Verfahren zur Steuerung stationärer Handhabungsgeräte zu verwenden, da insbesondere bei stationären Handhabungsgeräten komplexe Bewegungsmuster mit einer Vielzahl von Bedingungen für eine Vielzahl unterschiedlicher räumlicher Konstellationen wünschenswert sind.

## Patentansprüche

1. Verfahren zur Steuerung zumindest eines mehrachsigen automatisierten Handhabungsgerätes, insbesondere eines Industrieroboters (R),
**dadurch gekennzeichnet, dass**
für das Handhabungsgerät als erstes reales Objekt (O₁) ein erstes virtuelles Modell (V_{O1}) definiert wird und mindestens ein zweites virtuelles Modell (V_{O2}) definiert wird, welches einen realen räumlichen Bereich, und/oder ein zweites reales Objekt (O₂) repräsentiert;
zumindest das erste virtuelle Modell (V_{O1}) wiederholt abhängig von dem ersten realen Objekt (O₁) aktualisiert wird, insbesondere hinsichtlich der Position und/oder Konfiguration und/oder Dynamik des ersten realen Objektes;
in Bezug auf das erste virtuelle Modell (V_{O1}) und/oder in Bezug auf das zweite virtuelle Modell (V_{O2}) mindestens ein geometrischer Trigger vorgegeben wird, welcher mindestens eine geometrische Entscheidungsgröße, mindestens eine Auslösebedingung und mindestens eine Aktion umfasst, wobei der Trigger wiederholt überprüft wird und abhängig von der Entscheidungsgröße bei Eintreten der Auslösebedingung die Aktion ausgeführt wird,
wobei die Aktion ein Verändern des ersten und/oder zweiten virtuellen Modells und/oder ein Steuern zumindest des ersten realen Objekts (O₁) ist und
dass eine Schnittstelle vorgesehen ist, mittels derer ein oder mehrere Trigger definierbar und/oder veränderbar sind und/oder mittels derer virtuelle Objekte erstellbar und/oder veränderbar sind, wobei
die Schnittstelle eine Sammlung von Befehlen umfasst, mittels derer Trigger definierbar und/oder veränderbar sind und/oder mittels derer virtuelle Objekte erstellbar und/oder veränderbar sind und
wobei die Steuerung des Handhabungsgerät mittels des geometrischen Triggers ereignisbasiert durch Verwendung ereignisbasierter Programmierung erfolgt.

2. Verfahren nach Anspruch 1,
**dadurch gekennzeichnet,**
**dass** die Schnittstelle von einem Benutzer mittels eines Eingabegerätes bedienbar ist und/oder dass die Schnittstelle durch einen realen Sensor (S₁, S₂) abhängig von mindestens einem Sensormesssignal bedienbar ist.

3. Verfahren nach mindestens einem der vorangegangenen Ansprüche,
**dadurch gekennzeichnet,**
**dass** ein geometrischer Trigger vorgegeben ist, welcher als Entscheidungsgröße den räumlichen Abstand zwischen dem ersten und dem zweiten virtuellen Modell und als Abbruchbedingung einen Mindestabstand aufweist, insbesondere, dass als Aktion dem Trigger eine Bewegungsänderung des ersten virtuellen Objektes zugeordnet ist, derart, dass der vorgegebene Mindestabstand nicht unterschritten wird.

4. Verfahren nach Anspruch 3,
**dadurch gekennzeichnet,**
**dass** die Aktion eine Steuerung des ersten realen Objektes (O₁) ist, derart, dass eine Änderung der Bewegungsbahn zumindest eines Teilelementes des ersten realen Objektes (O₁) erfolgt, insbesondere,
**dass** die Änderung der Bewegungsbahn derart erfolgt, dass die geänderte Bewegungsbahn in einem vorgegebenen geometrischen Bezug zu dem zweiten virtuellen Modell (V_{O2}) verläuft, insbesondere in einem vorgegebenen Abstand zu mindestens einer Oberfläche des zweiten virtuellen Modells (V_{O2}).

5. Verfahren nach mindestens einem der vorangegangenen Ansprüche,
**dadurch gekennzeichnet,**
**dass** die Aktion ein Erzeugen und/oder ein Verändern des ersten und/oder zweiten virtuellen Modells umfasst und
**dass** die Aktion zusätzlich die Definition eines weiteren geometrischen Triggers bewirkt, mit Bezug zu dem erzeugten und/oder veränderten Modell.

6. Verfahren nach mindestens einem der vorangegangenen Ansprüche,
**dadurch gekennzeichnet, dass**
das mindestens das erste virtuelle Modells (V_{O1}) in Echtzeit aktualisiert wird, insbesondere mit einer vorgegebenen ersten Taktrate T₁.

7. Verfahren nach Anspruch 6,
**dadurch gekennzeichnet,**
**dass** der Trigger mit einer vorgegebenen Taktrate überprüft wird, insbesondere mit einer vorgegebenen zweiten Taktrate T₂, welche unterschiedlich zu der ersten Taktrate T₁, ist.

8. Verfahren nach mindestens einem der vorangegangenen Ansprüche,
**dadurch gekennzeichnet, dass**
die virtuellen Modelle anhand von Simulationssystemen und/oder von Sensordaten erstellt und angepasst werden.

9. Verfahren nach mindestens einem der vorangegangenen Ansprüchen,
**dadurch gekennzeichnet,**
**dass** mindestens ein Trigger mehrere Entscheidungsgrößen umfasst und dass für jede Entscheidungsgröße eine Einzelauslösebedingung definiert ist und als Auslösebedingung eine logische Verknüpfung der Einzelauslösebedingungen definiert ist.

10. verfahren nach mindestens einem der vorangegangenen Ansprüche,
**dadurch gekennzeichnet,**
**dass** ein geometrisches Modell definiert wird, welches mindestens das erste und das zweite virtuelle Modell (V_{O1}, V_{O2}) umfasst und
**dass** das geometrisches Modell als hierarchische Modellstruktur aufgebaut ist, wobei mehrere virtuelle Modelle einem gemeinsamen, übergeordneten Knoten zugeordnet sind und dem Knoten mindestens eine Eigenschaften zugeordnet ist.

11. Verfahren nach mindestens einem der vorangegangenen Ansprüche,
**dadurch gekennzeichnet,**
**dass** mindestens ein erster und ein zweiter geometrischer Trigger vorgegeben ist, wobei beide Trigger abhängig von der jeweiligen Entscheidungsgröße und Auslösebedingung mittels der jeweils zugeordneten Aktion-auf die Steuerung des ersten realen Objektes (O₁) einwirken und
**dass** wiederholt eine Überprüfung auf Widersprüche zwischen parallel existierenden Aktionen erfolgt, insbesondere,
**dass** Regeln zur Lösung von Widersprüchen vorgegeben sind und bei auftreten von Widersprüchen die tatsächlich ausgeführte Aktion anhand der Regeln bestimmt wird.

12. Verfahren nach mindestens einem der vorangegangenen Ansprüche,
**dadurch gekennzeichnet,**
**dass** eine manuelle Schnittstelle vorgesehen ist, mittels derer durch einen Benutzer manuell vorgegebene Steuerbefehle zur Steuerung des ersten realen Objektes an dieses weitergeleitet werden,
wobei ein Abgleich der manuellen Steuerbefehle mit evtl. vorhandenen Aktionen eines oder mehrere Trigger erfolgt, insbesondere,
**dass** gemäß Anspruch 9 eine Überprüfung auf Widersprüche einschließlich der manuell vorgegebenen Steuerbefehle erfolgt.

13. Verfahren nach mindestens einem der Ansprüche 11 und 12,
**dadurch gekennzeichnet,**
**dass** die Überprüfung auf Widersprüche in Echtzeit erfolgt, insbesondere mit einer vorgegebenen Taktrate.

## Claims

1. Method of controlling at least one multi-axis automated handling device, especially an industrial robot (R),
**characterised in that**
a first virtual model (V₀₁) is defined for the handling device as first real object (O₁) and at least one second virtual model (V₀₂) is defined, which represents a real spatial region and/or a second, real object (O₂);
at least the first virtual model (V₀₁) is repeatedly updated in dependence upon the first real object (O₁), especially in respect of the position and/or configuration and/or dynamics of the first real object;
in respect of the first virtual model (V₀₁) and/or in respect of the second virtual model (V₀₂) at least one geometric trigger is specified which comprises at least one geometric decision variable, at least one trigger condition and at least one action, the trigger being repeatedly checked and, in dependence upon the decision variable, the action being performed when the trigger condition occurs, the action being modification of the first and/or second virtual model(s) and/or control of at least the first real object (O₁); and
an interface is provided, by means of which one or more triggers are definable and/or modifiable and/or by means of which virtual objects are creatable and/or modifiable, the interface comprising a collection of commands by means of which triggers are definable and/or modifiable and/or by means of which virtual objects are creatable and/or modifiable, and the control of the handling device by means of the geometric trigger being effected on an event basis by the use of event-based programming.

2. Method according to claim 1,
**characterised in that**
the interface is operable by a user by means of an input device and/or the interface is operable by a real sensor (S₁, S₂) in dependence upon at least one sensor measurement signal.

3. Method according to at least one of the preceding claims,
**characterised in that**
a geometric trigger is specified which has as decision variable the spatial distance between the first and the second virtual models and as termination condition a minimum distance, especially that
there is assigned to the trigger as action a modification of the movement of the first virtual object such that the distance does not fall below the specified minimum distance.

4. Method according to claim 3,
**characterised in that**
the action is control of the first real object (O₁) such that a modification of the path of movement of at least one sub-element of the first real object (O₁) takes place, especially that
the modification of the path of movement takes place in such a way that the modified path of movement runs in specified geometric relation to the second virtual model (V₀₂), especially at a specified distance from at least one surface of the second virtual model (V₀₂).

5. Method according to at least one of the preceding claims,
**characterised in that**
the action comprises generation and/or modification of the first and/or second virtual model(s) and
the action additionally effects the definition of a further geometric trigger in relation to the generated and/or modified model.

6. Method according to at least one of the preceding claims,
**characterised in that**
at least the first virtual model (V₀₁) is updated in real time, especially at a specified first clock-pulse rate T₁.

7. Method according to claim 6,
**characterised in that**
the trigger is checked at a specified clock-pulse rate, especially at a specified second clock-pulse rate T₂ which is different from the first clock-pulse rate T₁.

8. Method according to at least one of the preceding claims,
**characterised in that**
the virtual models are created and adjusted with reference to simulation systems and/or sensor data.

9. Method according to at least one of the preceding claims,
**characterised in that**
at least one trigger comprises a plurality of decision variables and for each decision variable an individual trigger condition is defined, and as trigger condition a logical linking of the individual trigger conditions is defined.

10. Method according to at least one of the preceding claims,
**characterised in that**
a geometric model is defined which comprises at least the first and the second virtual models (V₀₁, V₀₂) and
the geometric model is constructed as a hierarchical model structure, with a plurality of virtual models being assigned to a common, higher level node and at least one characteristic being assigned to the node.

11. Method according to at least one of the preceding claims,
**characterised in that**
at least a first and a second geometric trigger are specified, both triggers acting on the control means of the first real object (O₁) by means of the respectively associated action in dependence upon the respective decision variable and trigger condition, and
a check is repeatedly carried out for conflicts between actions that exist in parallel, especially that
rules for solving conflicts are specified and when conflicts occur the action actually performed is determined with reference to the rules.

12. Method according to at least one of the preceding claims,
**characterised in that**
a manual interface is provided, by means of which control commands for controlling the first real object, which commands are specified manually by a user, are transmitted to the real object, the manual control commands being compared with any existing actions of one or more triggers, especially that
in accordance with claim 9, a check is made for conflicts including the manually specified control commands.

13. Method according to at least one of claims 11 and 12,
**characterised in that**
checking for conflicts takes place in real time, especially at a specified clock-pulse rate.

## Revendications

1. Procédé destiné à la commande d'au moins un appareil de manipulation automatisée multi-axes, en particulier d'un robot industriel (R),
**caractérisé en ce**
**qu'**il est défini pour l'appareil de manipulation un premier modèle virtuel (V_{O1}) comme premier objet réel (O₁) et au moins un deuxième modèle virtuel (V_{O2}) qui représente une zone spatiale réelle et/ou un deuxième objet réel (O₂) ;
au moins le premier modèle virtuel (V_{O1}) est actualisé de manière répétitive en fonction du premier objet réel (O₁), en particulier en ce qui concerne la position et/ou la configuration et/ou la dynamique du premier objet réel ;
au moins un déclencheur géométrique est prédéfini par rapport au premier modèle virtuel (V_{O1}) et/ou par rapport au deuxième modèle virtuel (V_{O2}), lequel comprend au moins une grandeur de décision géométrique, au moins une condition de déclenchement et au moins une action, le déclencheur étant vérifié de manière répétitive et l'action étant exécutée en fonction de la grandeur de décision lorsque la condition de déclenchement se produit,
l'action étant une modification du premier et/ou deuxième modèle virtuel et/ou une commande d'au moins le premier objet réel (O₁) et
**qu'**il est prévu une interface au moyen de laquelle un ou plusieurs déclencheurs peuvent être définis et/ou modifiés et/ou au moyen de laquelle des objets virtuels peuvent être créés et/ou modifiés,
l'interface comprenant une collections d'instructions au moyen desquelles des déclencheurs peuvent être définis et/ou modifiés et/ou au moyen desquels des objets virtuels peuvent être créés et/ou modifiés et
l'appareil de manipulation étant commandé par événements au moyen du déclencheur géométrique en utilisant une programmation par événements.

2. Procédé selon la revendication 1,
**caractérisé en ce**
**que** l'interface peut être commandée par un utilisateur au moyen d'un appareil d'entrée et/ou que l'interface peut être commandée par un capteur réel (S₁, S₂) en fonction d'au moins un signal de mesure de capteur.

3. Procédé selon au moins une des revendications précédentes,
**caractérisé en ce**
**qu'**il est prédéfini un déclencheur géométrique, lequel présente comme grandeur de décision la distance spatiale entre le premier et le deuxième modèle virtuel et comme condition d'arrêt une distance minimale, en particulier qu'il est associé au déclencheur en tant qu'action un changement de déplacement du premier objet virtuel tel que la distance minimale prédéfinie ne soit pas dépassée vers le bas.

4. Procédé selon la revendication 3,
**caractérisé en ce**
**que** l'action est une commande du premier objet réel (O₁) de façon qu'un changement de la trajectoire de déplacement d'au moins un élément partiel du premier objet réel (O₁) ait lieu, en particulier
**que** le changement de la trajectoire de déplacement ait lieu de façon que la trajectoire de déplacement modifiée s'étende dans un rapport géométrique prédéfini avec le deuxième modèle virtuel (V_{O2}), en particulier à une distance prédéfinie par rapport à au moins une surface du deuxième modèle virtuel (V_{O2}).

5. Procédé selon au moins une des revendications précédentes,
**caractérisé en ce**
**que** l'action comprend une génération et/ou une modification du premier et/ou deuxième modèle virtuel et
**que** l'action entraîne de plus la définition d'un autre déclencheur géométrique, ayant un rapport avec le modèle généré et/ou modifié.

6. Procédé selon au moins une des revendications précédentes,
**caractérisé en ce**
**qu'**au moins le premier modèle virtuels (V_{O1}) est actualisé en temps réel, en particulier à une première fréquence d'horloge prédéfinie T₁.

7. Procédé selon la revendication 6,
**caractérisé en ce**
**que** le déclencheur est vérifié à une fréquence d'horloge prédéfinie, en particulier à une deuxième fréquence d'horloge prédéfinie T₂ qui est différente de la première fréquence d'horloge T₁.

8. Procédé selon au moins une des revendications précédentes,
**caractérisé en ce**
**que** les modèles virtuels sont créés et adaptés à l'aide de systèmes de simulation et/ou de données de capteurs.

9. Procédé selon au moins une des revendications précédentes,
**caractérisé en ce**
**qu'**au moins un déclencheur comprend plusieurs grandeurs de décision et qu'une condition de déclenchement individuelle est définie pour chaque grandeur de décision et qu'une combinaison logique des conditions de déclenchement individuelles est définie comme condition de déclenchement.

10. Procédé selon au moins une des revendications précédentes,
**caractérisé en ce**
**qu'**il est défini un modèle géométrique, lequel comprend au moins le premier et le deuxième modèle virtuel (V_{O1}, V_{O2}) et
**que** le modèle géométrique est construit sous forme de structure de modèle hiérarchique, plusieurs modèles virtuels étant associés à un noeud commun d'ordre supérieur et au moins une propriété étant associée au noeud.

11. Procédé selon au moins une des revendications précédentes,
**caractérisé en ce**
**qu'**au moins un premier et un deuxième déclencheur géométrique sont prédéfinis, les deux déclencheurs agissant sur la commande du premier objet réel (O₁) au moyen de l'action respectivement associée en fonction de la grandeur de décision et condition de déclenchement respective et
**qu'**une vérification de contradictions entre des actions existant en parallèle a lieu de manière répétitive, en particulier
**que** des règles pour résoudre les contradictions sont prédéfinies et qu'en cas de contradictions l'action effectivement exécutée est déterminée à l'aide de ces règles.

12. Procédé selon au moins une des revendications précédentes,
**caractérisé en ce**
**qu'**il est prévu une interface manuelle au moyen de laquelle des instructions de commande prédéfinies manuellement par un utilisateur et destinées à commander le premier objet réel sont transmises à ce dernier,
un arbitrage des instructions de commande manuelles avec des actions éventuellement existantes d'un ou plusieurs déclencheurs a lieu, en particulier que selon la revendication 9 une vérification de contradictions, y compris des instructions de commande prédéfinies manuellement, a lieu.

13. Procédé selon au moins une des revendications 11 et 12,
**caractérisé en ce**
**que** la vérification de contradictions a lieu en temps réel, en particulier à une fréquence d'horloge prédéfinie.
